(19) Europäisches Patentamt
European Patent Office
Office européen des brevets

(11) **EP 2 677 764 B1**

(12) **FASCICULE DE BREVET EUROPEEN**

(45) Date de publication et mention
de la délivrance du brevet:
**25.10.2017 Bulletin 2017/43**

(51) Int Cl.:
***H04N 21/4722*** *(2011.01)*     ***H04N 21/462*** *(2011.01)*
***H04N 21/81*** *(2011.01)*        ***H04N 21/239*** *(2011.01)*
***H04N 21/436*** *(2011.01)*       ***H04N 21/41*** *(2011.01)*
***H04N 21/43*** *(2011.01)*        ***H04N 21/8547*** *(2011.01)*
***H04N 21/242*** *(2011.01)*       ***H04N 21/61*** *(2011.01)*

(21) Numéro de dépôt: **13173023.6**

(22) Date de dépôt: **20.06.2013**

(54) **Declenchement d'une action relative a un flux**

Auslösung einer Aktion bezüglich eines Flusses

Triggering an action relative to a flow

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.06.2012 FR 1255927
18.07.2012 FR 1256926**

(43) Date de publication de la demande:
**25.12.2013 Bulletin 2013/52**

(73) Titulaire: **Orange
75015 Paris (FR)**

(72) Inventeurs:
• **Rault, Jean-Bernard
35690 ACIGNE (FR)**

• **Besset, Benoit
35235 THORIGNE FOUILLARD (FR)**
• **Berrani, Sid Ahmed
35135 CHANTEPIE (FR)**

(74) Mandataire: **Millet, Sandrine
Orange
IMTW/OLPS/IPL/PAT
Orange Gardens
44 Avenue de la République
CS 50010
92326 Châtillon Cedex (FR)**

(56) Documents cités:
**GB-A- 2 483 277        US-A1- 2008 092 164
US-A1- 2010 295 992    US-A1- 2011 103 763
US-A1- 2012 117 584**

## Description

L'invention se rapporte au domaine de la télévision et de la radiodiffusion et plus particulièrement à celui de l'accès à des contenus complémentaires à un flux en cours de diffusion.

La demande de brevet publiée le 28/12/2011 sous le numéro 2400753 décrit un système et un procédé dans lequel un contenu complémentaire à un programme en cours de diffusion et affiché sur un écran déporté est restitué sur un écran local d'un terminal pendant la restitution du programme sur l'écran déporté. Grâce à ce procédé, un utilisateur peut ainsi obtenir, pendant la restitution d'un programme, un ou plusieurs contenus en lien avec le programme qu'il regarde. Ces contenus complémentaires sont par exemple une vidéo, un lien vers un site permettant d'obtenir des informations sur les acteurs d'un film en cours de restitution ou encore le résumé d'un épisode d'une série télévisée.

Parmi les contenus complémentaires ainsi reçus, certains sont liés à un événement précis du flux en cours de restitution. A titre d'exemple, un contenu complémentaire qui est un message contenant l'adresse d'un site donnant des précisions sur une publicité en cours de diffusion doit être affiché sur l'écran local au moment de la restitution de la publicité associée. Egalement, à titre d'exemple, un message du type "Pour obtenir une liste des films dans lequel cette actrice est l'actrice principale, cliquer ici" doit être affiché à un moment précis de la restitution correspondant au moment où l'actrice apparaît sur l'écran déporté. De même, les applications de vote ou de jeu doivent être présentées à l'utilisateur au moment où le présentateur présente le vote ou le jeu sur l'écran déporté.

Les inventeurs ont constaté que de tels contenus ne sont pas affichés en parfaite synchronisation avec le programme regardé et qu'un contenu peut être affiché avec de l'avance ou du retard par rapport à un événement restitué.

Ce décalage est gênant pour l'utilisateur qui doit faire un effort pour faire le lien entre un contenu reçu sur un terminal local et un événement passé ou à venir du programme en cours de restitution sur l'écran déporté.

Il existe donc un besoin de synchroniser une action sur un terminal local, par exemple la restitution d'un contenu complémentaire, et la restitution d'un contenu ou d'un événement d'un contenu auquel il se rapporte.

Un exemple est divulgué dans le document US2012/0117584.

L'invention vient améliorer la situation.

A cet effet, l'invention se rapporte à un procédé de déclenchement d'au moins une action relative à un premier flux en cours de diffusion représentatif d'un contenu multimédia et restitué par un dispositif de restitution.

Selon l'invention, le procédé comporte les étapes telles que décrites dans les revendications.

Un premier flux diffusé est reçu et restitué par un dispositif de restitution. Ce premier flux est représentatif d'un contenu multimédia. Des premières données représentant un extrait du flux restitué par le dispositif de restitution sont obtenues. Des deuxièmes données représentant le même extrait dans un deuxième flux représentatif du même contenu multimédia sont également obtenues.

Une première estampille temporelle définit une date de restitution de l'extrait par le dispositif de restitution. La deuxième estampille temporelle définit une date de l'extrait dans le deuxième flux.

La connaissance de la première estampille temporelle et de la deuxième estampille temporelle permet de déterminer un décalage temporel entre le premier et le deuxième flux

Le décalage déterminé permet ensuite de déterminer avec précision un instant de déclenchement d'une action relative au flux en cours de restitution.

Ainsi, une action peut être déclenchée en parfaite synchronisation avec le flux diffusé restitué par le dispositif de restitution, par exemple avec un événement précis intervenant dans le flux en cours de restitution.

Selon un mode de réalisation du procédé de déclenchement, une dite action est une restitution d'un contenu complémentaire à un contenu du premier flux en cours de restitution sur le dispositif de restitution.

Ainsi, un contenu complémentaire peut être restitué en parfaite synchronisation avec la restitution du flux diffusé par le dispositif de restitution.

Selon un mode de réalisation particulier du procédé de déclenchement, le premier flux correspond à un signal comporte au moins une composante audio et l'étape d'obtention des premières données comprend une étape d'enregistrement d'un extrait de ladite composante audio.

L'enregistrement d'un extrait de signal audio est simple à réaliser et nécessite peu de contraintes de mise en oeuvre.

Selon un mode de réalisation particulier du procédé de déclenchement, ledit premier flux comprend au moins une composante audio et les premières données sont une empreinte numérique déterminée à partir d'un extrait d'au moins une des composantes dudit premier flux.

La détermination d'une empreinte numérique à partir d'un extrait d'une composante du flux permet de réduire la quantité de données à traiter.

Selon un mode de réalisation particulier, le procédé de déclenchement comprend en outre une étape d'obtention d'une pluralité de données représentant une pluralité d'extraits représentatifs du deuxième flux et l'étape d'obtention d'un instant de déclenchement comprend une étape de recherche desdites deuxièmes données parmi la pluralité de données.

Ce mode de réalisation ne nécessite pas une liaison permanente avec un serveur. Après obtention de la pluralité de données, le dispositif mettant en oeuvre le procédé de déclenchement ne nécessite pas de connexion avec un serveur distant.

Ce mode de réalisation est particulièrement adapté au cas où le premier flux est prédéterminé à l'avance et n'est pas susceptible de subir des modifications. Il est particulièrement adapté au cas où le premier flux est représentation d'une vidéo à la demande ou d'un contenu restitué en temps différé.

Selon une caractéristique particulière du procédé de déclenchement, les premières données comprennent une première suite ordonnée de signatures datées et les données représentant une pluralité d'extraits représentatifs du deuxième flux comprennent au moins une deuxième suite ordonnée de signatures datées.

Une suite ordonnée de signatures datées est un exemple d'empreinte numérique. Une suite ordonnée de signatures datées est représentative d'un extrait de flux tout en comportant un volume de données faible par rapport audit extrait.

Selon une autre caractéristique du procédé de déclenchement, une signature est obtenue par filtrage d'une portion du premier ou du deuxième flux, par une pluralité de filtres du type filtre de second ordre.

Ce type de filtrage permet d'obtenir des signatures robustes au bruit ambiant. Il permet d'obtenir un instant de déclenchement même dans le cas où les premières données sont obtenues dans un environnement bruité.

Selon une autre caractéristique du procédé de déclenchement, l'étape de recherche comprend une étape de sélection d'une séquence de signatures consécutives d'une dite deuxième suite en fonction d'un critère de similitude entre ladite séquence et des signatures de la première suite et ladite deuxième estampille temporelle est la date associée à la première signature de la séquence sélectionnée.

La sélection d'une séquence de signatures en fonction d'un critère de similitude de signatures est un moyen simple et performant pour rechercher une séquence dans une suite.

Selon une caractéristique particulière du procédé de déclenchement, la sélection de la séquence comporte une étape de sélection d'au moins un couple de signatures comportant une signature d'une dite deuxième suite et une signature de la dite première suite en fonction d'un critère de similitude entre une signature de la deuxième suite et une signature de la première suite, une étape de comparaison d'une séquence de signatures consécutives de ladite deuxième suite, ladite séquence comprenant une desdites au moins une signature sélectionnée, avec des signatures de la première suite et ladite séquence est sélectionnée en fonction du résultat de la comparaison.

L'étape de sélection des couples permet de déterminer des candidats potentiels. L'étape de sélection est suivie d'une étape de comparaison lors de laquelle l'environnement, c'est-à-dire les signatures voisines, sont prises en compte, pour sélectionner un candidat parmi les candidats potentiels.

Ce mode de calcul permet d'obtenir un taux de performance élevé lors la recherche d'un extrait. Les temps de calcul sont inférieurs à ceux obtenus avec une méthode de comparaison systématique de toutes les séquences. Il ne nécessite pas de moyens de calculs importants par exemple en termes de puissance de calcul.

Selon une caractéristique particulière du procédé de déclenchement, l'espace temporel entre deux signatures consécutives d'une dite deuxième suite est un multiple de l'espace temporel entre deux signatures consécutives de la première suite.

Le nombre de signatures par unité de temps est ainsi plus important dans une première suite que dans une deuxième suite. L'augmentation du nombre de signatures de la première suite permet d'augmenter la précision de l'instant de déclenchement.

Selon un mode de réalisation particulier, le procédé de déclenchement comprend en outre une étape de transmission d'une requête contenant lesdites premières données à un serveur distant et la deuxième estampille temporelle est une estampille temporelle de réception dudit extrait dans ledit flux reçu par ledit serveur.

Dans ce mode de réalisation, les premières données représentant l'extrait dans le flux restitué sont transmises à un serveur distant. Ainsi, le serveur peut rechercher ledit extrait dans un deuxième flux similaire au premier flux et reçu par ledit serveur et déterminer l'instant de réception par le serveur, de cet extrait dans le deuxième flux.

Dans ce mode de réalisation, la détermination d'une empreinte numérique à partir d'un extrait de signal par un dispositif mettant en oeuvre le procédé de déclenchement permet de réduire la quantité de données contenues dans la requête transmise au serveur distant.

Selon un mode de réalisation du procédé de déclenchement, l'étape d'obtention d'un instant de déclenchement comprend une étape de réception d'une information temporelle déterminée en fonction de ladite deuxième estampille.

Une information temporelle déterminée par un serveur distant et reçue par un dispositif mettant en oeuvre le procédé de déclenchement permet d'obtenir un instant de déclenchement synchronisé avec un flux ou un contenu du flux en cours de restitution.

Selon une caractéristique particulière, le procédé de déclenchement comprend une étape de transmission de la première estampille temporelle et l'information temporelle reçue est un dit instant de déclenchement.

Dans ce mode de réalisation, l'instant de déclenchement d'une action est déterminé par une entité distante et simplifie ainsi la tâche du dispositif mettant en oeuvre le procédé de déclenchement.

Selon une autre caractéristique particulière, l'étape d'obtention d'un instant de déclenchement comprend une étape de détermination dudit instant de déclenchement en fonction de ladite information temporelle reçue.

Ce mode de réalisation permet de limiter le volume des informations échangées entre le dispositif mettant en oeuvre le procédé de déclenchement et le serveur dans la mesure où une même information temporelle reçue permet de déterminer les instants de déclenchement de plusieurs actions, par exemple la restitution de plusieurs contenus complémentaires.

Selon une autre caractéristique particulière du procédé de déclenchement, la requête comprend en outre la première estampille temporelle et l'information temporelle est un intervalle de temps calculé entre la première et la deuxième estampille temporelle.

L'intervalle de temps calculé entre la première et la deuxième estampille temporelle est un exemple d'information temporelle reçue.

Selon une autre caractéristique particulière du procédé de déclenchement, ladite information temporelle reçue est la deuxième estampille temporelle.

La deuxième estampille temporelle est un deuxième exemple d'information temporelle reçue.

Selon un mode de réalisation particulier, l'action déclenchée est une restitution complémentaire à partir d'une position dans le contenu complémentaire déterminée en fonction de la deuxième estampille temporelle.

L'invention se rapporte également à un dispositif de déclenchement d'au moins une action relative à un premier flux en cours de diffusion représentatif d'un contenu multimédia, ledit flux étant restitué par un dispositif de restitution.

Selon l'invention, le dispositif de déclenchement comporte les caractéristiques telles que décrites dans les revendications. Ladite action est relative à un flux en cours de restitution sur le dispositif de restitution.

Selon une caractéristique particulière, le dispositif de déclenchement comporte en outre un module de transmission d'une requête contenant lesdites données à un serveur distant.

L'invention se rapporte encore à un terminal comportant un dispositif de déclenchement tel que décrit précédemment.

L'invention se rapporte aussi à un produit programme d'ordinateur comprenant des instructions pour mettre en oeuvre les étapes d'un procédé de déclenchement d'au moins une action relative à un premier flux en cours de diffusion, tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :

- la figure 1 est un schéma bloc illustrant un système selon un premier mode de réalisation de l'invention,
- la figure 2 est un organigramme illustrant les différentes étapes d'un procédé de déclenchement, respectivement d'un procédé de transmission, selon un premier mode de réalisation,
- la figure 3 est un organigramme illustrant un mode de réalisation d'une étape de détermination d'une deuxième estampille temporelle,
- la figure 4a est un premier diagramme temporel illustrant des intervalles de temps, selon un mode de réalisation,
- la figure 4b est un deuxième diagramme temporel illustrant des intervalles de temps, selon un mode de réalisation,
- la figure 5 est un schéma bloc illustrant un système selon un deuxième mode de réalisation de l'invention,
- la figure 6 est un organigramme illustrant les différentes étapes d'un procédé de déclenchement, respectivement de transmission, selon un deuxième mode de réalisation,
- la figure 7 est un schéma bloc illustrant un système selon un troisième mode de réalisation de l'invention,
- la figure 8 est un organigramme illustrant les différentes étapes d'un procédé de déclenchement selon un troisième mode de réalisation,
- la figure 9a est un diagramme représentant des intervalles déterminés dans un deuxième flux représentatif du contenu V selon un mode de réalisation de l'invention,
- la figure 9b est un diagramme représentant des intervalles déterminés dans un premier flux représentatif du contenu V selon un mode de réalisation de l'invention,
- la figure 10 est un schéma bloc illustrant un système selon un troisième mode de réalisation de l'invention,
- la figure 11 illustre un exemple de première séquence et de deuxième séquence déterminée dans un mode de réalisation particulier,
- la figure 12 est un schéma bloc illustrant un système selon un troisième mode de réalisation de l'invention,

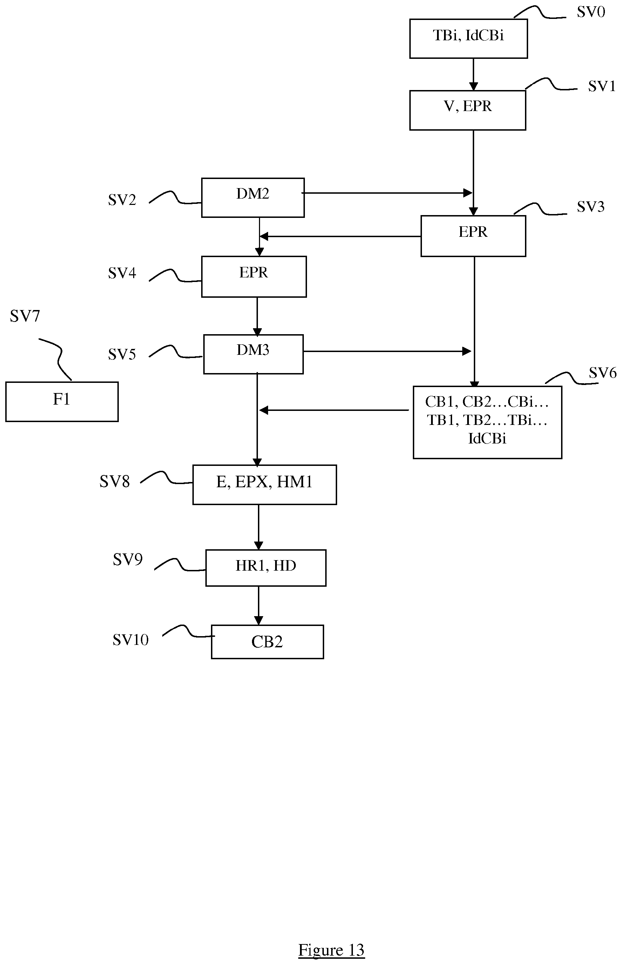

- la figure 13 est un organigramme illustrant les différentes étapes d'un procédé de déclenchement selon un quatrième mode de réalisation,
- la figure 14 est un diagramme temporel illustrant un flux représentatif du contenu V et un flux représentatif de contenus complémentaires selon un mode de réalisation de l'invention,
- la figure 15 est un diagramme temporel illustrant un flux représentatif du contenu V et un flux représentatif d'un contenu complémentaire selon un mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

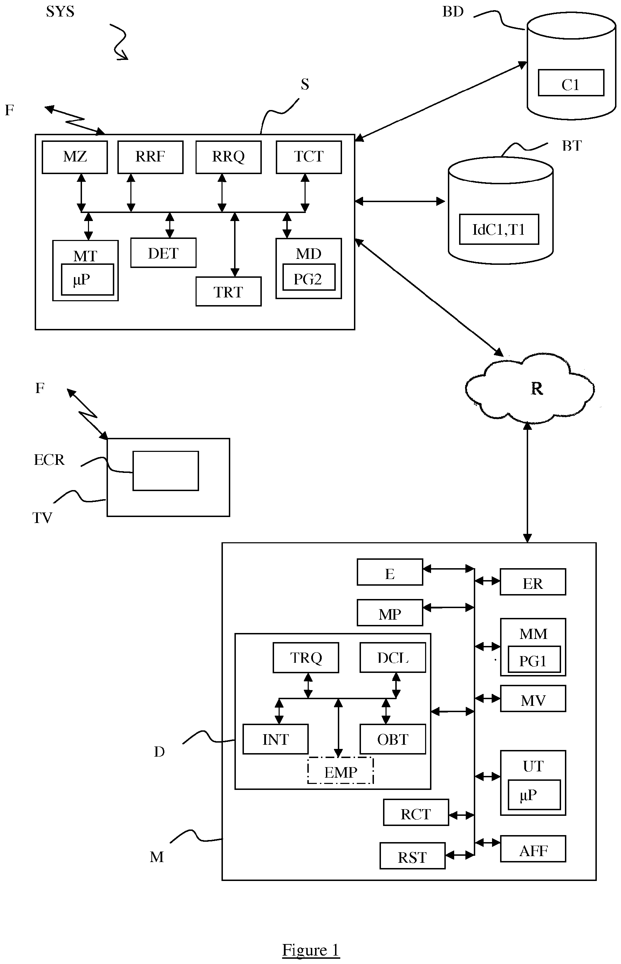

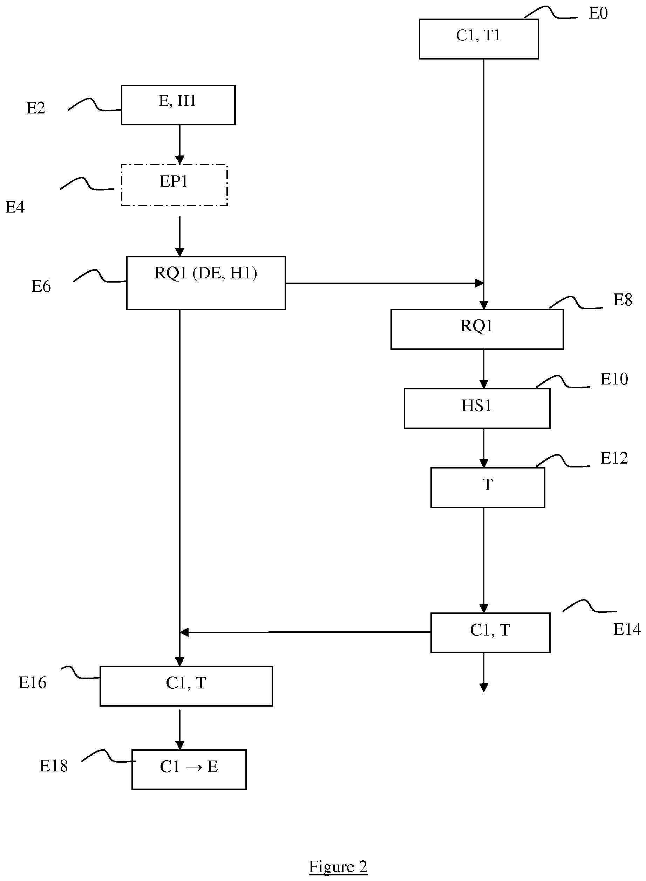

Un premier mode de réalisation d'un procédé de déclenchement d'au moins une action relative à un flux, respectivement d'un procédé de transmission d'une information temporelle, va maintenant être décrit en référence aux figures 1 et 2.

Dans le mode de réalisation décrit, une action est une restitution d'un contenu complémentaire.

A titre d'alternative, une action est par exemple une notification.

En référence à la **figure 1,** un système SYS comprend un terminal de communication M, un dispositif de restitution TV et un serveur distant S.

Le terminal M est apte à communiquer avec le serveur distant S au travers d'un réseau de télécommunication R.

Le dispositif de restitution TV est apte à recevoir et à restituer en temps réel un flux multimédia F diffusé par un serveur de diffusion (non représenté).

Le flux multimédia F est par exemple un flux audiovisuel et la restitution du flux multimédia F sur le dispositif de restitution TV comprend l'affichage d'au moins une partie vidéo du flux sur un écran ECR du dispositif de restitution TV et la restitution d'au moins une partie audio du flux multimédia F sur des haut-parleurs du dispositif de restitution TV.

A titre d'alternative, le flux F est un flux audio, par exemple un flux diffusé par une station de radio, et la restitution du flux F comprend uniquement la restitution du flux sur des haut-parleurs du dispositif de restitution.

Le flux multimédia F est par exemple reçu par le dispositif de restitution TV via un réseau hertzien.

A titre d'alternative, le flux multimédia F est reçu par le dispositif de restitution TV via une passerelle domestique, par exemple une LiveBOX (marque déposée), et un adaptateur, par exemple un adaptateur de type Set Top Box.

Le flux multimédia F est constitué de plusieurs contenus successifs.

Un contenu est par exemple un film, une partie d'un film, un documentaire, une publicité ou une émission de variété.

Le terminal M est par exemple un terminal mobile, un terminal de type PDA, une tablette ou encore un ordinateur de type PC.

Le terminal M comporte une unité de traitement UT munie d'un microprocesseur, reliée à une ou plusieurs mémoires MV de type RAM et à une ou plusieurs mémoires MM de type ROM.

L'unité de traitement UT est pilotée par un programme informatique PG1. Le programme informatique PG1 comporte des instructions de programme adaptées à mettre en oeuvre notamment un procédé de déclenchement d'au moins une action relative à un flux selon un mode de réalisation de l'invention décrit ultérieurement en référence à la figure 2.

Le terminal M comporte également un écran de visualisation E, un microphone MP, un module de restitution RST, un module de réception d'un contenu complémentaire RCT et un module de communication ER avec le serveur distant S via le réseau de communication R.

Le module de restitution RST du terminal M est apte à restituer un contenu. Le module de restitution RST est par exemple, apte à afficher une partie vidéo d'un contenu sur l'écran de visualisation E et à diffuser sur au moins une entité de restitution du son (non représentée) du terminal M, le son d'un contenu dans le cas où le contenu comporte une partie audio.

Le terminal M comporte également un dispositif de déclenchement D.

Le dispositif de déclenchement D comporte un module d'obtention de données représentant un extrait OBT, un module de transmission d'une requête TRQ, un module d'obtention d'un instant de déclenchement INT et un module de déclenchement d'une action DCL.

A titre d'alternative, le dispositif de déclenchement D comporte également un module de détermination d'empreintes EMP.

Le serveur S comporte une unité de traitement MT munie d'un microprocesseur, une ou plusieurs mémoires MZ de type RAM et une ou plusieurs mémoires MD de type ROM.

L'unité de traitement MT est pilotée par un programme informatique PG2. Le programme informatique PG2 comporte des instructions de programme adaptées à mettre en oeuvre notamment un procédé de transmission d'une information temporelle relative à un flux en cours de diffusion selon un mode de réalisation de l'invention décrit ultérieurement en référence à la figure 2.

Le serveur S comporte également un module de réception RRF du flux multimédia F, un module de réception de requêtes RRQ, un module de transmission TCT de contenus complémentaires, un module de détermination d'une deuxième estampille temporelle DET et un module de transmission d'une information temporelle TRT.

Le système SYS comporte également une première base de données BC accessible par le serveur S dans laquelle sont enregistrés des contenus complémentaires et une deuxième base de données BT également accessible par le serveur S dans laquelle sont enregistrés des identifiants de contenus complémentaires en association avec une date de restitution prévue.

Le serveur S accède à la base de données BC et/ou à la base de données BT par une liaison directe, par exemple une liaison filaire, ou via le réseau de télécommunication R.

En référence à la figure 2, les étapes d'un procédé de déclenchement d'au moins une action relative à un flux et d'un procédé de transmission d'une information temporelle sont illustrées.

Les étapes E2, E6, E16, et E18 représentent les étapes du procédé de déclenchement mises en oeuvre par exemple par le dispositif de déclenchement D du terminal M.

Les étapes E8, E10, E12 et E14 représentent les étapes du procédé de transmission mises en par exemple par le serveur S.

Lors d'une étape préalable E0, le serveur S détermine une date de restitution prévue T1 pour un contenu complémentaire C1 enregistré dans la base de données BC.

Le contenu complémentaire C1 est par exemple un contenu multimédia complémentaire à un contenu P du flux multimédia F, par exemple une publicité. Le contenu multimédia C1 doit par exemple être affiché 30 secondes après le début de la publicité P prédéterminée.

La date de restitution du début du contenu P est par exemple déterminée à partir d'un guide de programmes EPG (pour "Electronic Program Guide" en anglais) ou par analyse du flux en cours de diffusion reçu par le serveur S.

La date prévue pour la restitution prévue T1 pour la restitution du contenu complémentaire C1 est ensuite enregistrée en association avec un identifiant IdC1 du contenu C1 par exemple dans la base de données BT.

Par exemple, la diffusion du contenu P débute à 20 heures et 5 minutes et la date de restitution prévue T1 est 20 heures, 5 minutes et 30 secondes.

A titre d'alternative, la date de restitution prévue T1 comporte également un jour, un mois, une année...

Le module de réception RRF du serveur S est apte à recevoir en temps réel le flux multimédia F diffusé par le serveur de diffusion.

Le module de réception RRF du serveur S est un module de réception du flux diffusé par un réseau de transmission. Le réseau de transmission est par exemple un réseau hertzien, un réseau Internet...

Le flux multimédia F reçu par le serveur S est le flux multimédia F reçu par le dispositif de restitution TV. Cependant, le délai de transmission entre le serveur de diffusion et le dispositif de restitution TV, respectivement entre le serveur de diffusion et le serveur S, étant dépendant notamment du réseau de transmission utilisé, de la zone géographique et du terminal recevant le flux, le flux F n'est pas reçu en même moment par le dispositif de restitution TV et par le serveur S.

Lors d'une étape E2, le module d'obtention OBT du dispositif de déclenchement D du terminal M obtient, à un instant H1 un extrait E du flux F en cours de restitution sur le dispositif de restitution TV.

L'extrait E obtenu est par exemple un extrait du signal audio restitué par le dispositif de restitution TV.

L'extrait E est par exemple obtenu par enregistrement via le microphone MP du terminal M, entre les instants H1 et H2, d'un signal audio émis par le dispositif de restitution TV.

A titre d'alternative, le signal enregistré est un signal vidéo ou un signal audio-vidéo.

Lors de l'étape E2, le module d'obtention OBT du dispositif de déclenchement D du terminal M obtient également une première estampille temporelle.

Par exemple, la première estampille temporelle de l'extrait E est l'instant H1 de début d'enregistrement de cet extrait, c'est-à-dire la date de début de restitution de l'extrait E par le dispositif de restitution TV.

Par exemple, l'estampille temporelle H1 est 19:45:00 (pour 19 heures, 45 minutes et 0 seconde).

Lors d'une étape E6, le module de transmission de requêtes TRQ du dispositif de déclenchement D transmet au serveur S une requête RQ1 contenant d'une part, des données DE représentant l'extrait E et d'autre part la première estampille temporelle H1.

Les données DE représentant l'extrait sont dans le mode de réalisation décrit, l'extrait E de signal enregistré.

A titre d'alternative, la requête RQ1 ne comprend pas la première estampille temporelle H1.

Egalement, à titre d'alternative, les données DE représentant l'extrait E, contenues dans la requête RQ1, sont une empreinte numérique EP1 déterminée par un module de détermination d'empreintes EMP du dispositif de déclenchement D lors d'une étape E4 réalisée antérieurement à l'étape E6.

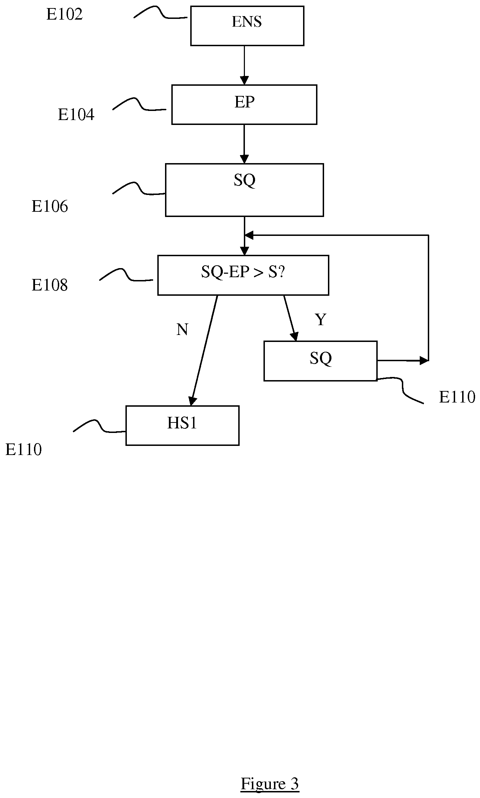

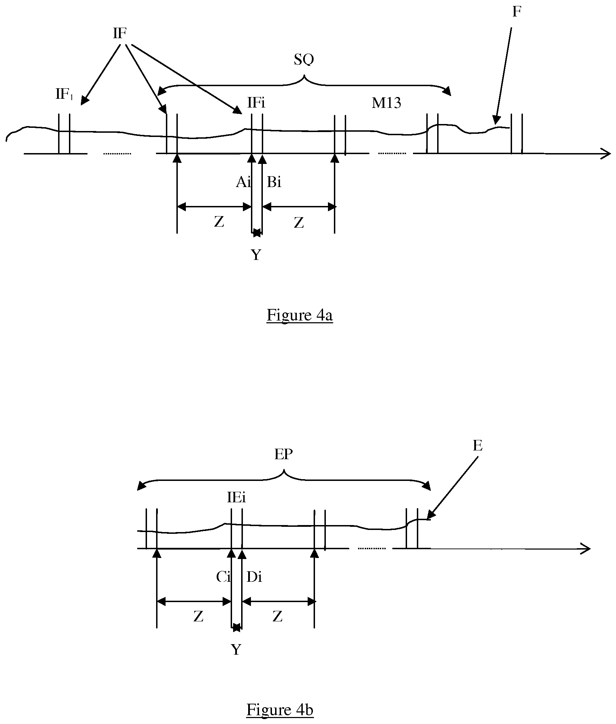

Un exemple de détermination d'une empreinte numérique est décrit dans la suite de la description en référence aux figures 3 et 4b.

L'étape E6 est suivie d'une étape E8 lors de laquelle la requête RQ1 est reçue par le module de communication ER du serveur S.

Lors d'une étape E10, le module de détermination DET du serveur S détermine une deuxième estampille temporelle HS1 pour l'extrait E.

La deuxième estampille temporelle HS1 correspond à la réception de l'extrait E dans le flux multimédia F reçu par le serveur S, par exemple à la réception du début de l'extrait E.

Plus précisément, la deuxième estampille temporelle HS1 est déterminée par recherche de l'extrait E dans le flux multimédia F reçu par le serveur S. Par exemple, la recherche comporte une étape de comparaison d'extraits de l'extrait E avec des extraits du flux F reçu par le serveur S.

Un mode de réalisation de détermination de la deuxième estampille temporelle est détaillé dans la suite de la description en référence aux figures 3, 4a et 4b.

Par exemple, la deuxième estampille temporelle HS1 est 19:44:58.

L'étape E10 est suivie d'une étape E12 lors de laquelle le module de détermination DET du serveur S détermine un instant de déclenchement T.

Plus précisément, le module de détermination DET du serveur S détermine un intervalle de temps D entre la première estampille temporelle H1 et la deuxième estampille temporelle HS1.

L'intervalle de temps est par exemple déterminé par l'équation : D = H1-HS1.

L'intervalle de temps D est par exemple positif si l'extrait E est reçu par le dispositif de restitution TV après avoir été reçu par le serveur S. Il est négatif dans le cas contraire.

L'intervalle de temps D est par exemple de 2 secondes.

L'instant de déclenchement T correspond à l'instant de restitution prévu T1 enregistré dans la base de données BT en association avec un identifiant du contenu C1 et auquel la valeur de l'intervalle de temps D est ajoutée (T = T1+D).

Lors d'une étape E14, réalisée par exemple à 19:50:00, le module de transmission de contenus TCT du serveur S transmet au terminal M, le contenu complémentaire C1

Egalement, lors de l'étape E14, le module de transmission d'une information temporelle TRT du serveur S transmet, à destination du terminal M, l'instant de déclenchement T déterminé.

Lors d'une étape E16, le module de communication ER du terminal M reçoit le contenu complémentaire C1 et l'instant de déclenchement déterminé T. Le module de communication ER transmet alors d'une part, l'instant de déclenchement T déterminé au module d'obtention d'un instant de déclenchement INT du dispositif de déclenchement D et d'autre part le contenu complémentaire C1 au module de réception de contenus RCT du terminal M.

L'étape E16 est ici une étape d'obtention de l'instant de déclenchement T, c'est-à-dire d'un instant de déclenchement déterminé en fonction de la première estampille temporelle H1 et de la deuxième estampille temporelle HS1.

Puis, lors d'une étape E18, réalisée à partir de l'instant de déclenchement T obtenu, le module de déclenchement DCL du dispositif de déclenchement D commande le déclenchement de la restitution du contenu complémentaire C1 par le terminal M.

La restitution du contenu complémentaire représente une action AC déclenchée par le dispositif de déclenchement D.

Ainsi, le contenu complémentaire C1 est restitué de façon synchronisée avec le flux F restitué par le dispositif de restitution TV.

Un utilisateur du terminal M, à proximité du dispositif de restitution TV peut ainsi obtenir un contenu complémentaire C1 en parfaite synchronisation avec le flux F restitué par le dispositif de restitution TV.

Dans le mode de réalisation décrit, les horloges du terminal M et du serveur S sont supposées synchronisées. A titre d'alternative, la requête RQ1 comprend également une date SYN pour permettre la synchronisation des horloges du terminal T et du serveur S. La synchronisation peut également être effectuée par l'envoi de la date SYN dans une requête différente de la requête RQ1.

Dans une première variante de réalisation, l'étape E14 est réalisée à l'instant de déclenchement déterminé T et le terminal M restitue le contenu complémentaire C1 dès sa réception.

Dans le mode de réalisation décrit, la valeur D de l'intervalle de temps entre la première et la deuxième estampille temporelle est déterminée par le serveur S. L'instant de déclenchement T est également déterminé par le serveur S et transmis par celui-ci au terminal M.

Dans une deuxième variante de réalisation, la valeur D de l'intervalle de temps entre la première et la deuxième estampille temporelle, déterminée par le serveur S, est transmise au terminal M. Le serveur S transmet également au terminal M, le contenu complémentaire C1 et la date de restitution prévue T1. Le terminal M détermine l'instant de déclenchement T en fonction de la valeur D de l'intervalle de temps reçue et la date de restitution T1.

Dans une troisième variante de réalisation, la requête RQ1 ne contient pas la première estampille temporelle H1. Le serveur S détermine puis transmet au terminal M la deuxième estampille temporelle HS1. Le serveur S transmet également le contenu complémentaire C1 et la date de restitution prévue T1. Le terminal M calcule la valeur D de l'intervalle de temps entre la première et la deuxième estampille temporelle puis détermine l'instant de déclenchement T en fonction de l'intervalle de temps D et de la date de restitution prévue T1. Il commande ensuite la restitution du contenu complémentaire C1 à partir de l'instant de déclenchement déterminé T.

A titre d'alternative, le contenu complémentaire C1 et la date prévue de restitution sont transmis par le serveur S avant la réception de la requête RQ1.

Egalement, à titre d'alternative, le contenu complémentaire C1 est transmis par un serveur de transmission de contenus complémentaires ayant des moyens d'accès à la base de données BC et la date de restitution déterminée T est transmise par le serveur S.

Egalement à titre d'alternative, le contenu complémentaire C1 et la date de restitution prévue sont transmis par le serveur de transmission de contenus complémentaires ayant des moyens d'accès aux bases de données BC et BF.

Dans le mode de réalisation décrit, le dispositif de déclenchement D est intégré dans le terminal M. A titre d'alternative, le dispositif de déclenchement D est un dispositif indépendant apte à communiquer avec le terminal M, par exemple via une liaison filaire. Par exemple, le dispositif de déclenchement D est intégré dans une passerelle domestique, par exemple une LiveBox, ou dans une Set Top Box.

Egalement, à titre d'alternative, le dispositif de déclenchement D est intégré dans un terminal mobile et le terminal M qui exécute l'action déclenchée, par exemple la restitution, est un ordinateur de type PC ou encore le dispositif de restitution TV.

Dans le mode de réalisation décrit, le terminal M et le dispositif de restitution TV sont deux dispositifs distincts. A titre d'alternative, le dispositif de restitution est intégré dans le terminal M. Le flux F et le ou les contenus complémentaires sont alors restitués par le même dispositif. Ils sont par exemple affichés sur le même écran.

Un mode de réalisation de détermination par le serveur distant S, d'une deuxième estampille temporelle HS1 pour un extrait de signal E va maintenant être décrit en référence à la **figure 3.**

L'extrait de signal E est par exemple d'une durée L, par exemple quelques secondes.

Lors d'une étape E102, un ensemble ENS de M sous empreintes est déterminé pour le flux multimédia F reçu par le serveur S.

Plus précisément, au fur et à mesure de la réception du flux F, des intervalles de temps IF sont déterminés et un signal audio reçu pendant chaque intervalle de temps est extrait du flux F.

Les intervalles de temps IF sont d'une durée Y prédéterminée, par exemple de quelques millisecondes. Les intervalles de temps IF sont régulièrement espacés dans le temps. L'espace temporel entre deux intervalles de temps IF consécutifs est d'une durée prédéterminée Z.

Les intervalles de temps IF sont disjoints.

A titre d'alternative, les intervalles de temps IF se chevauchent.

Des intervalles de temps IF1, IF2...IFi...sont ainsi déterminés.

Un intervalle de temps IFi commence à un instant Ai et se termine à un instant $Bi=Ai+Y$.

L'instant Ai de début de l'intervalle IFi correspond à la date de réception du flux associé. L'instant Ai est déterminé par le serveur S.

La **figure 4a** illustre des intervalles de temps IF.

Une sous empreinte EFi est déterminée pour chaque intervalle IFi. Une sous empreinte EFi déterminée pour un intervalle IFi comprend d'une part, le signal audio associé à l'intervalle IFi et extrait du flux F et d'autre part, la date Ai de début de l'intervalle IFi.

L'ensemble ENS est un ensemble ordonné comprenant les M dernières sous empreintes EFi calculées.

L'ensemble M est régulièrement mis à jour : lorsqu'une nouvelle sous empreinte est déterminée, la sous empreinte la plus ancienne est retirée de l'ensemble ENS de sous empreintes et la nouvelle sous empreinte déterminée est ajoutée.

Lors d'une E104, une empreinte EP est déterminée à partir de l'extrait de signal E reçu dans la requête RQ1.

Plus précisément, des intervalles de temps IE sont déterminés et le signal audio correspondant à chaque intervalle de temps est extrait du signal reçu E.

Le début du premier intervalle correspond, par exemple, au début du signal E.

Les intervalles de temps IE sont d'une durée égale à la durée Y des intervalles de temps IF déterminés lors de l'étape E102 et l'espace temporel entre deux intervalles consécutifs est de durée prédéterminée Z égale à l'espace temporel séparant deux intervalles de temps IF déterminés lors de l'étape E102.

Un intervalle IEi commence à un instant Ci et se termine à un instant $Fi=Ci+Y$.

La figure 4b est un diagramme temporel illustrant des intervalles de temps IE.

Une sous empreinte EEi est déterminée pour chaque intervalle IEi. Une sous empreinte EEi déterminée pour un intervalle IEi comprend d'une part, le signal audio associé à l'intervalle IEi et d'autre part, la date Ci de début de l'intervalle IEi.

A titre d'alternative, une sous empreinte EEi ne contient pas de date.

N intervalles IEi et N sous empreintes EEi sont ainsi déterminés.

L'empreinte EP est constituée des N sous empreintes EEi déterminées.

L'empreinte EP est une suite ordonnée des N sous empreintes EEi déterminées.

Lors d'une étape E106, l'empreinte EP déterminée lors de l'étape E104 est recherchée dans l'ensemble ENS de sous empreintes EFi déterminé lors de l'étape E102.

Pour cela, lors d'une première sous étape E108, une séquence courante SQ de N sous empreintes consécutives de l'ensemble ENS est déterminée. Par exemple, la séquence courante SQ comprend les N sous empreintes EFi les plus anciennes, c'est-à-dire celles dont la date Ai associée est la plus ancienne.

Puis, lors d'une étape E110, les N sous empreintes de l'empreinte EP sont comparées à la séquence courante SQ.

La comparaison comprend par exemple un calcul d'une distance DST entre les N sous empreintes de l'empreinte EP et les N sous empreintes de la séquence courante SQ.

La distance DST calculée est ensuite comparée à une valeur de seuil DM prédéterminée.

Si la distance DST entre les N sous empreintes de l'empreinte EP et les N sous empreintes de la séquence courante SQ est supérieure au seuil DM, une nouvelle séquence courante est déterminée lors d'une étape E112 et l'étape E110 de comparaison est réitérée avec la nouvelle séquence courante.

Par exemple, la nouvelle séquence courante correspond à la séquence courante dans laquelle la sous empreinte la plus ancienne est retirée et dans laquelle la sous empreinte suivant la sous empreinte la plus récente est ajoutée.

Si la distance DST entre les N sous empreintes de l'empreinte EP et les N sous empreintes de la séquence courante SQ est inférieur au seuil DM, l'empreinte EP est considérée comme similaire à la séquence courante SQ et l'estampille temporelle HS1 est la date de la sous empreinte la plus ancienne de la séquence courante SQ (sous étape E114).

Le seuil DM permet de prendre en compte d'éventuelles distorsions des signaux.

Le calcul de la distance est effectué à l'aide d'un algorithme classique de mise en correspondance de signaux, par exemple décrit dans un article de J. Haitsma et de T. Kalker, intitulé "A highly robust audio finger-printing system," ISMIR, 2002.

La distance DST est par exemple une distance de Hamming si les sous-empreintes sont de type binaire.

A titre d'alternative, la distance DST est une distance euclidienne.

Dans le cas où aucune correspondance entre l'empreinte EP et l'ensemble ENS est trouvée, un message d'échec est par exemple transmis au terminal M et le terminal M obtient et transmet un nouvel extrait de signal.

A titre d'alternative, l'étape E104 de détermination de l'empreinte EP est réalisée par le terminal M.

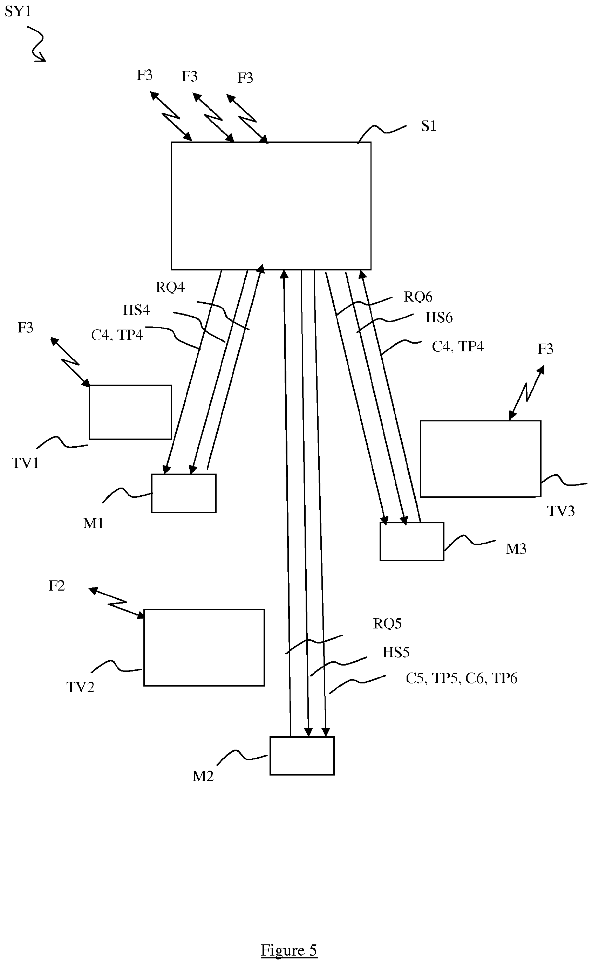

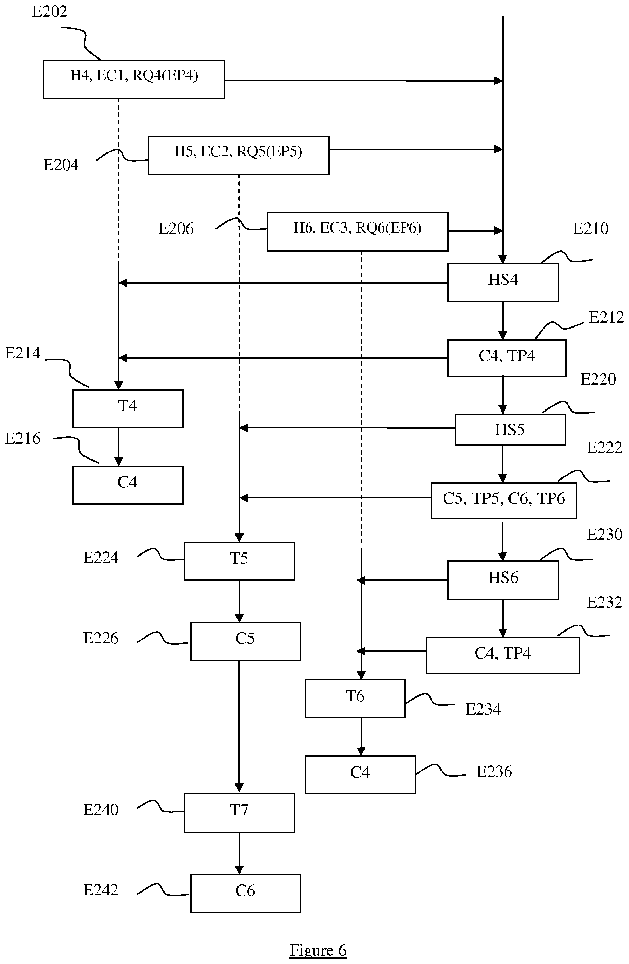

Un deuxième mode de réalisation va maintenant être décrit en référence aux figures 5 et 6.

En référence à la **figure 5,** un système SY1 comprend un serveur S1, trois dispositifs de restitution TV1, TV2, TV3 et trois terminaux M1, M2, M3.

Les terminaux M1, M2 et M3 sont aptes à communiquer avec le serveur S1 via un réseau de télécommunication (non représenté).

Le serveur S1 est apte à recevoir une pluralité de flux diffusés par un ou plusieurs serveurs de diffusion (non représentés). Par exemple, le serveur S1 reçoit en temps réel, trois flux multimédia F1, F2 et F3.

Le premier dispositif de restitution TV1 est apte à recevoir et à restituer en temps réel, sur un écran du dispositif de restitution TV1,un flux diffusé, par exemple le flux F3.

Le deuxième dispositif de restitution TV2 est apte à recevoir et à restituer en temps réel, sur un écran du dispositif de restitution TV2, un flux diffusé, par exemple le flux F2.

Le troisième dispositif de restitution TV3 est apte à recevoir et à restituer en temps réel, sur un écran du dispositif de restitution TV3, un flux diffusé, par exemple le flux F3.

Des contenus complémentaires C4, C5, C6...sont enregistrés en association avec un identifiant de flux et une date de restitution prévue dans une mémoire accessible par le serveur S1.

La **figure 6** est un organigramme illustrant les différentes étapes d'un procédé de déclenchement d'au moins une action mis en respectivement par les terminaux M1, M2 et M3 et les différentes étapes d'un procédé de transmission mis en par le serveur S1.

Lors d'une étape E202, le terminal M1 enregistre à partir d'un instant H4, un extrait EC1 du signal audio émis par le dispositif de restitution TV1, détermine une empreinte numérique EP4 à partir de l'extrait EC1 et transmet au serveur S1, une requête RQ4 contenant l'empreinte numérique EP4.

L'empreinte EP4 représente des données D1 représentant l'extrait EC1. L'instant H4 représente une première estampille temporelle.

Lors d'une étape E204, le terminal M2 enregistre à partir d'un instant H5, un extrait EC2 du signal audio émis par le dispositif de restitution TV2, détermine une empreinte numérique EP5 à partir de l'extrait EC2 et transmet au serveur S, une requête RQ5 contenant l'empreinte numérique EP5.

L'empreinte EP5 représente des données D2 représentant l'extrait EC2. L'instant H5 représente une première estampille temporelle.

Lors d'une étape E206, le terminal M3 enregistre à partir d'un instant H6, un extrait EC3 du signal audio émis par le dispositif de restitution TV3, détermine une empreinte numérique EP6 à partir de l'extrait EC3 et transmet au serveur S1, une requête RQ3 contenant l'empreinte numérique EP6.

L'empreinte EP6 représente des données D3 représentant l'extrait EC3. L'instant H6 représente une première estampille temporelle.

Lors d'une étape E210, le serveur S1 recherche dans les flux F1, F2 et F3 une empreinte numérique EF4 correspondant à l'empreinte numérique reçue EP4 et détermine une deuxième estampille temporelle HS4 pour l'extrait EC1. Par exemple, l'empreinte numérique EP4 est trouvée dans le flux F3. Puis, le serveur S1 transmet la deuxième estampille temporelle HS4 au terminal M1.

Lors d'une étape E212, le serveur S1 transmet au terminal M1, un ou plusieurs contenus complémentaires à restituer et les dates de restitution prévues pour ces contenus. Par exemple, le serveur S1 transmet au terminal M1, un contenu complémentaire C4 et une date de restitution prévue TP4.

Lors d'une étape E214, le terminal M1 détermine un instant de déclenchement T4 en fonction de la date de restitution prévue TP4 pour le contenu complémentaire C4, de la première estampille H4 et la deuxième estampille temporelle HS4.

Lors d'une étape E216, réalisée à l'instant de déclenchement déterminé T4, le terminal M1 déclenche la restitution du contenu C4.

Par exemple, l'intervalle de temps entre la première H4 et la deuxième estampille temporelle HS4 est de +15secondes, la date de restitution TP4 prévue pour le contenu complémentaire C4 est 20h50 et l'instant de déclenchement déterminé T4 est 20h50mn15s.

Lors d'une étape E220, le serveur S1 recherche dans les flux F1, F2 et F3 une empreinte numérique EF5 correspondant à l'empreinte numérique reçue EP5 et détermine une deuxième estampille temporelle HS5 pour l'extrait EC2. Par exemple, l'empreinte numérique EF5 est trouvée dans le flux F2. Puis, le serveur S1 transmet la deuxième estampille temporelle HS5 au terminal M2.

Lors d'une étape E222, le serveur S1 transmet au terminal M2, un ou plusieurs contenus complémentaires à restituer et les dates de restitution prévues pour ces contenus. Par exemple, le serveur S1 transmet au terminal M2, un contenu complémentaire C5, une date de restitution prévue TP5 pour la restitution du contenu C5, un contenu complémentaire C6 et une date de restitution prévue TP6 pour la restitution du contenu C6.

Lors d'une étape E224, le terminal M2 détermine un instant de déclenchement T5 en fonction de la date de restitution prévue TP5 pour le contenu complémentaire C5, de la première estampille H5 et la deuxième estampille temporelle HS5.

Lors d'une étape E226, réalisée à l'instant de déclenchement déterminé T5, le terminal M2 déclenche la restitution du contenu C5.

Par exemple, l'intervalle de temps entre la première et la deuxième estampille temporelle est de +1 seconde, l'heure de restitution prévue pour le contenu complémentaire C5 est 20h58mn10s et l'heure de restitution déterminée est 20h58mn11s.

Lors d'une étape E230, le serveur S1 recherche dans les flux F1, F2 et F3 une empreinte numérique EF6 correspondant à l'empreinte numérique reçue EP6 et détermine une deuxième estampille temporelle HS6 pour l'extrait EC3. Par exemple, l'empreinte numérique EF6 est trouvée dans le flux F3. Puis, le serveur S1 transmet la deuxième estampille temporelle HS6 au terminal M3.

Lors d'une étape E232, le serveur S1 transmet au terminal M3, un ou plusieurs contenus complémentaires à restituer et les dates de restitution prévues pour ces contenus. Par exemple, le serveur S1 transmet au terminal M3, le contenu complémentaire C4 et la date de restitution prévue TP4.

Lors d'une étape E234, le terminal M3 détermine un instant de déclenchement T6 en fonction de la date de restitution prévue TP4 pour le contenu complémentaire C4, de la première estampille H6 et la deuxième estampille temporelle HS6.

Lors d'une étape E236, réalisée à l'instant de déclenchement déterminé T6, le terminal M3 déclenche la restitution du contenu C4.

Par exemple, l'intervalle de temps entre la première H6 et la deuxième estampille temporelle HS6 est de -15secondes, la date de restitution TP4 prévue pour le contenu complémentaire C4 est 20h50 et l'instant de déclenchement déterminé T6 est 20h49mn45s.

Lors d'une étape E240, le terminal M2 détermine un instant de déclenchement T7 en fonction de la date de restitution prévue TP6 pour le contenu complémentaire C6, de la première estampille H5 et la deuxième estampille temporelle HS5.

Lors d'une étape E242, réalisée à l'instant de déclenchement déterminé T7, le terminal M2 déclenche la restitution du contenu C6.

A titre d'alternative, l'étape E240 est précédée d'une étape d'obtention, par le terminal M2, d'un nouvel extrait de flux et d'une première estampille temporelle associée H7, d'une étape d'envoi, par le terminal M2, d'une nouvelle requête RQ7 contenant une empreinte numérique déterminée à partir du nouvel extrait de flux, d'une étape de réception, par le terminal M2, d'une deuxième estampille temporelle HS7 déterminée en fonction de l'empreinte numérique contenue dans la requête RQ7 et lors de l'étape E240, le terminal M2 détermine l'instant de déclenchement T7 en fonction de la date de restitution prévue TP6 pour le contenu complémentaire C6, de la première estampille H7 et la deuxième estampille temporelle HS7.

Dans les modes de réalisation décrits, une action est une restitution d'un contenu complémentaire à un contenu du flux et un instant de déclenchement est déterminé par rapport à une date de restitution prévue pour la restitution du contenu complémentaire. La date de restitution prévue est la date prévue pour l'action de restitution.

L'invention s'applique également à toute action ou événement pour lequel une date d'action ou d'évènement prévue est déterminée par un serveur distant, par exemple le serveur S, en fonction du flux reçu par le serveur. L'instant de déclenchement est déterminé par rapport à la date d'action prévue pour ladite d'action

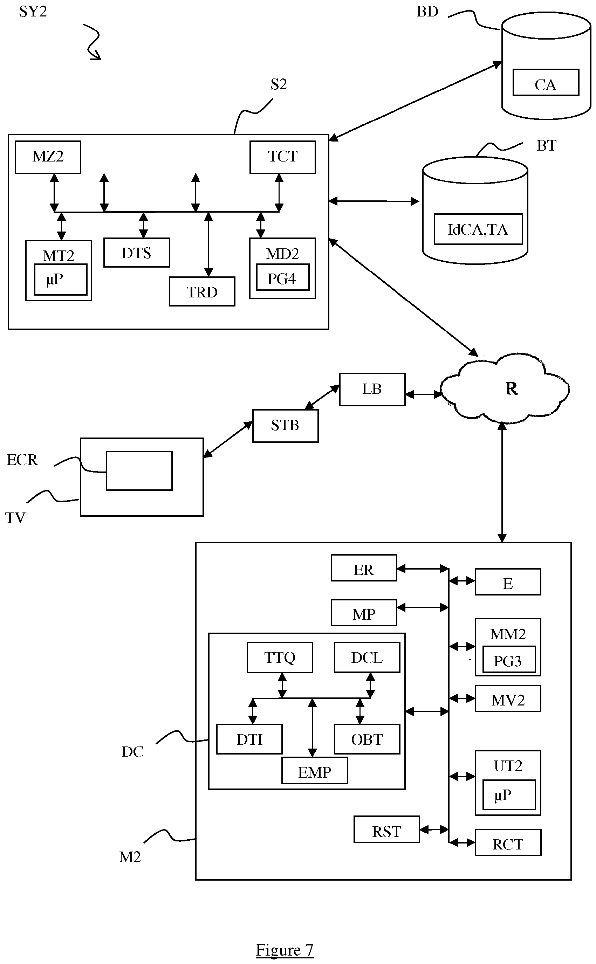

Un troisième mode de réalisation d'un procédé de déclenchement d'au moins une action relative à un flux va maintenant être décrit en référence aux figures 7 à 12.

Dans le mode de réalisation décrit, une action est une restitution d'un contenu complémentaire.

A titre d'alternative, une action est par exemple une notification.

En référence à la **figure 7,** un système SY2 comprend un terminal de communication M2, un dispositif de restitution TV et un serveur distant S2.

Le terminal M2 est apte à communiquer avec le serveur distant S2 au travers d'un réseau de télécommunication R.

Le dispositif de restitution TV est apte à recevoir et à restituer un flux multimédia F1 diffusé par un serveur de diffusion (non représenté).

Le flux F1 représente un premier flux.

Le flux multimédia F1 est par exemple un flux transmis de point à point par un serveur distant (non représenté). Par exemple, le flux multimédia F1 contient un ensemble de contenus diffusés successivement ou est un contenu du type "vidéo à la demande" (VOD pour "Video On Demand" en anglais).

A titre d'alternative, le premier flux F1 est un flux télévisé diffusé par un serveur de diffusion.

Le flux multimédia F1 est par exemple un flux audiovisuel et la restitution du flux multimédia F1 sur le dispositif de restitution TV comprend l'affichage d'au moins une composante vidéo du flux F1 sur un écran ECR du dispositif de restitution TV et la restitution d'au moins une composante audio du flux multimédia F1 sur des haut-parleurs du dispositif de restitution TV.

A titre d'alternative, le flux F1 est un flux audio, par exemple un flux diffusé par une station de radio, et la restitution du flux F1 comprend uniquement la restitution du flux sur des haut-parleurs du dispositif de restitution.

Le flux multimédia F1 est par exemple reçu par le dispositif de restitution TV via une passerelle domestique LB, par exemple une LiveBOX (marque déposée), et un adaptateur STB, par exemple un adaptateur de type Set Top Box.

A titre d'alternative, le flux multimédia F1 est reçu par le dispositif de restitution TV via un réseau hertzien.

Le flux multimédia F1 est constitué d'un ou plusieurs contenus successifs.

Un contenu est par exemple un programme télévisé, un film, une partie d'un film, un documentaire, une publicité ou une émission de variété.

Le terminal M2 est par exemple un terminal mobile, un terminal de type PDA, une tablette ou encore un ordinateur de type PC.

Le terminal M2 comporte une unité de traitement UT2 munie d'un microprocesseur, reliée à une ou plusieurs mémoires MV2 de type RAM et à une ou plusieurs mémoires MM2 de type ROM.

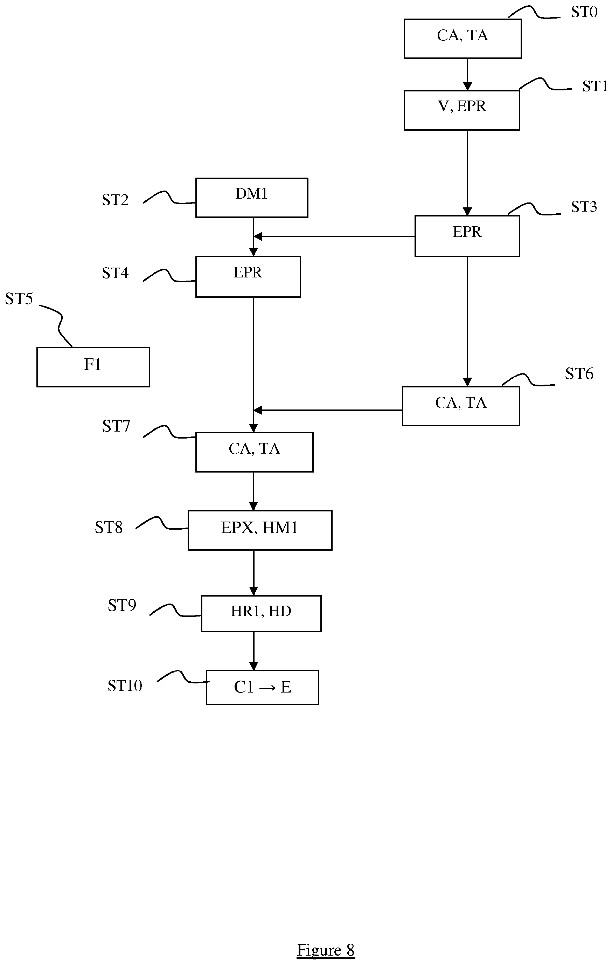

L'unité de traitement UT2 est pilotée par un programme informatique PG3. Le programme informatique PG3 comporte des instructions de programme adaptées à mettre en notamment un procédé de déclenchement d'au moins une action relative à un premier flux selon un mode de réalisation de l'invention décrit ultérieurement en référence à la figure 8.

Le terminal M2 comporte également un écran de visualisation E, un microphone MP, un module de restitution RST, un module de réception d'un contenu complémentaire RCT et un module de communication ER avec le serveur distant S2 via le réseau de communication R.

Le module de restitution RST du terminal M2 est apte à restituer un contenu.

Le terminal M2 comporte également un dispositif de déclenchement DC.

Le dispositif de déclenchement DC comporte un module d'obtention OBT de données représentant un extrait du premier flux F1, un module de traitement d'une requête TTQ, un module de détermination d'un instant de déclenchement DTI, un module de détermination d'empreintes EMP et un module de déclenchement d'une action DCL.

Le serveur S2 comporte une unité de traitement MT2 munie d'un microprocesseur, une ou plusieurs mémoires MZ2 de type RAM et une ou plusieurs mémoires MD2 de type ROM.

Le serveur S2 comporte également un module de transmission TCT de contenus complémentaires, un module de détermination DTS d'empreintes de référence et un module de transmission TRD d'empreintes de référence.

Le système SY2 comporte également une première base de données BC accessible par le serveur S2 dans laquelle sont enregistrés des contenus complémentaires et une deuxième base de données BT également accessible par le serveur S2 dans laquelle sont enregistrés des identifiants de contenus complémentaires en association avec une date de restitution prévue.

Le serveur S2 accède à la base de données BC et/ou à la base de données BT par une liaison directe, par exemple une liaison filaire, ou via le réseau de télécommunication R.

En référence à la **figure 8,** les étapes d'un procédé de déclenchement d'au moins une action relative à un premier flux sont illustrées.

Lors d'une étape préalable ST0, le serveur S2 détermine une date de restitution prévue TA pour un contenu complémentaire CA enregistré dans la base de données BC.

Le contenu complémentaire CA est par exemple un contenu multimédia complémentaire à un contenu prédéterminé V, par exemple un film.

La date de restitution TA prévue pour le contenu complémentaire CA est par exemple un délai déterminé par rapport au début du contenu V. Le contenu complémentaire CA doit par exemple être affiché 30 secondes après le début du film V.

La date de restitution prévue TA pour le contenu complémentaire CA est ensuite enregistrée en association avec un identifiant IdCA du contenu CA par exemple dans la base de données BT.

Lors d'une étape préalable ST1, le module de détermination DTS du serveur S2 détermine une empreinte de référence EPR pour le contenu V.

L'empreinte de référence EPR représente des données représentant une pluralité d'extraits représentatifs d'un deuxième flux F2 représentatif du contenu V.

Le contenu V est par exemple d'une durée LV, par exemple une centaine de secondes.

Dans le mode de réalisation, l'empreinte de référence EPR est une suite ordonnée de signatures datées. Plus précisément, l'empreinte de référence EPR est une suite ordonnée de NV sous empreintes et une sous empreinte de l'empreinte de référence EPR est déterminée à partir d'un extrait du deuxième flux F2 représentatif du contenu V.

Une sous empreinte contient une signature et une estampille temporelle associée.

L'estampille temporelle est par exemple une date de l'extrait correspondant, par exemple un délai calculé pour cet extrait par rapport à un repère temporel, par exemple à partir du début du contenu V dans le deuxième flux F2.

L'empreinte obtenue est par exemple enregistrée dans une mémoire accessible par le serveur S2.

Un mode détaillé de détermination d'une empreinte de référence est décrit dans la suite de la description.

Lors d'une étape ST2, le module de traitement de requêtes TTQ du terminal M2 transmet à destination du serveur S2 une demande DM1 d'une empreinte de référence pour le contenu V, c'est-à-dire de données représentant une pluralité d'extraits représentatifs d'un flux représentatif du contenu V.

L'étape ST2 est suivie d'une étape ST3 lors de laquelle le serveur S2 transmet l'empreinte de référence EPR déterminée pour le contenu V lors de l'étape préalable ST1.

L'étape ST3 est suivie d'une étape ST4 lors de laquelle le terminal M2 reçoit, en réponse à la demande DM1, l'empreinte de référence EPR déterminée pour le contenu V lors de l'étape préalable ST1.

A titre d'alternative, le terminal M2 reçoit plusieurs empreintes de référence, c'est-à-dire une pluralité de données représentant une pluralité d'extraits représentatifs d'un ou plusieurs flux, un des flux étant représentatif du contenu V

L'empreinte reçue est par exemple enregistrée dans une mémoire du terminal M2, par exemple la mémoire MM2 du terminal M2.

Lors d'une étape ST5, le premier flux F1 représentatif du contenu V est restitué par le dispositif de restitution TV.

Le premier flux F1 est par exemple restitué, suite à une requête d'obtention du contenu V transmise du dispositif de restitution TV à destination d'un serveur accessible via le réseau de communication R. La requête est par exemple transmise suite à une demande de contenu effectuée par un utilisateur du dispositif de restitution TV, par exemple au moyen d'une interface graphique affichée sur l'écran ECR du dispositif de restitution TV.

A titre d'alternative, le contenu V a été préalablement enregistré par un dispositif d'enregistrement (non représenté) à disposition de l'utilisateur et l'utilisateur commande la restitution du contenu V sur le dispositif de restitution TV.

Lors d'une étape ST6, le serveur S2 transmet à destination du terminal M2, le contenu complémentaire CA et la date de restitution prévue TA.

L'étape ST6 est suivie d'une étape ST7 lors de laquelle le terminal M2 reçoit le contenu complémentaire CA et la date TA et les enregistre dans une mémoire, par exemple une mémoire MM2 du terminal M2.

Lors d'une étape ST8, le module d'obtention OBT du dispositif de déclenchement DC du terminal M2 obtient des données représentant un extrait du premier flux F1 restitué.

Plus précisément, le module d'obtention OBT du dispositif de déclenchement DC du terminal M2 obtient, à un instant HM1, un extrait E du premier flux F1 en cours de restitution sur le dispositif de restitution TV.

Puis, le module de détermination d'empreintes EMP du dispositif de déclenchement DC du terminal M2 détermine une empreinte numérique EPX pour l'extrait E obtenu. L'empreinte numérique EPX représente des premières données représentant l'extrait E du premier flux F1.

L'extrait E obtenu est par exemple un extrait d'une composante audio du premier flux F1 restitué par le dispositif de restitution TV.

L'extrait E est par exemple obtenu par enregistrement via le microphone MP du terminal M2, entre des instants HM1 et HM2, d'un signal audio émis par le dispositif de restitution TV.

Lors de l'étape ST8, le module d'obtention OBT du dispositif de déclenchement DC du terminal M2 obtient également une première estampille temporelle.

Par exemple, la première estampille temporelle de l'extrait E est l'instant HM1 de début d'enregistrement de cet extrait par le terminal M2, c'est-à-dire la date de début de restitution de l'extrait E par le dispositif de restitution TV.

Un mode de réalisation détaillée de la détermination d'une empreinte numérique EPX est détaillé dans la suite en la description.

Lors d'une étape ST9, le module de détermination d'un instant de déclenchement DTI du dispositif de déclenchement DC du terminal M2 obtient un instant de déclenchement HD. L'instant de déclenchement HD est déterminé en fonction de la première estampille temporelle HM1 et d'une deuxième estampille temporelle HR1. L'instant de déclenchement HD est également déterminé en fonction de la date de restitution TA prévue pour le contenu complémentaire CA.

La deuxième estampille temporelle est associée à des deuxièmes données DE2. Les deuxièmes données DE2 représentent l'extrait E et sont obtenues à partir du deuxième flux F2 représentatif du contenu V.

L'étape ST9 d'obtention d'un instant de déclenchement HD comprend une détermination de la deuxième estampille temporelle HR1 par le terminal M2.

La détermination de la deuxième estampille temporelle HR1 comprend dans le mode de réalisation décrit, une étape de sélection d'une séquence de signatures consécutives d'une suite ordonnée de signatures datées déterminée pour le contenu V représenté dans le deuxième flux F2. La deuxième estampille temporelle HR1 est la date associée à la première signature de la séquence sélectionnée.

Un mode de réalisation particulier de l'étape de détermination de la deuxième estampille temporelle HR1 est détaillé dans la suite de la description.

Lors d'une étape ST10, réalisée à partir de l'instant de déclenchement HD obtenu lors de l'étape ST9, le module de déclenchement DCL du dispositif de déclenchement DC du terminal M2 commande le déclenchement de la restitution du contenu complémentaire CA par le module de restitution RST du terminal M2.

La restitution du contenu complémentaire CA représente une action AC2 déclenchée par le dispositif de déclenchement DC.

Ainsi, le contenu complémentaire CA est restitué de façon synchronisée avec le premier flux F1 restitué par le dispositif de restitution TV.

Un utilisateur du terminal M2, à proximité du dispositif de restitution TV peut ainsi obtenir un contenu complémentaire CA en parfaite synchronisation avec le premier flux F1 restitué par le dispositif de restitution TV.

Dans une variante du mode de réalisation, des empreintes de références sont déterminées pour plusieurs contenus et transmises au terminal M2. Lors de l'étape ST9, l'empreinte EPX est alors recherchée parmi les empreintes de référence reçues.

Dans une seconde variante, les étapes ST5 à ST10 sont réitérées. Lors de l'étape ST5, une deuxième extrait du premier flux est obtenu et une nouvelle empreinte est déterminée à partir du nouvel extrait obtenu. Lors de l'étape de détermination ST9, la recherche d'une empreinte EPR est effectuée parmi les signatures déterminées pour le deuxième flux et postérieures à la séquence de signatures sélectionnée lors de l'étape ST9 de l'itération précédente. La recherche peut également tenir compte d'un intervalle de temps entre la réception du nouvel extrait et de l'extrait obtenu précédemment.

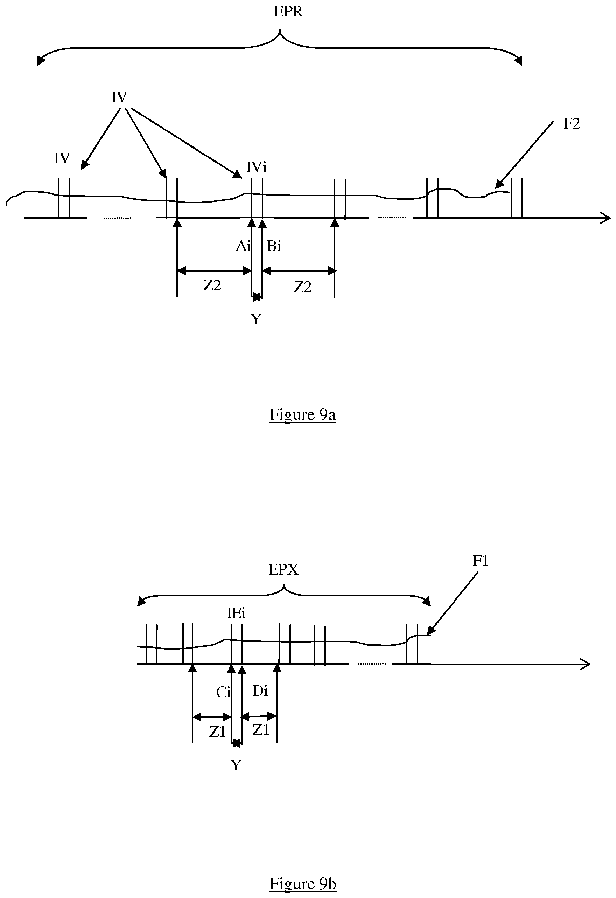

Un mode de réalisation particulier de l'étape ST2 d'obtention de données représentant une pluralité d'extraits représentatifs du deuxième flux, de l'étape ST7 d'obtention de premières données représentant un extrait et de l'étape d'obtention d'une deuxième estampille temporelle de l'étape ST8 vont maintenant être décrites en référence aux figures 9 à 12.

Dans le mode de réalisation décrit, des données déterminant un extrait représentatif du contenu V dans le deuxième flux F2 sont une empreinte numérique de référence EPR qui est une suite ordonnée de signatures datées.

De plus, des données déterminant un extrait représentatif du contenu V dans le premier flux F1 sont une empreinte numérique EPX qui est une suite ordonnée de signatures datées.

Un mode de réalisation de l'étape ST2 d'obtention d'une empreinte de référence EPR va maintenant être décrit.

L'empreinte de référence EPR est obtenue à partir d'un deuxième flux F2 représentatif du contenu V. Le flux F2 est par exemple obtenu à partir d'une version du contenu V enregistrée dans une mémoire du serveur S2.

Le flux F2 comprend une composante audio et une composante vidéo.

L'empreinte de référence EMP est obtenue par traitement de la composante audio du flux F2. Le contenu V a par exemple une durée LV, par exemple une centaine de secondes.

Des intervalles de temps IV sont déterminés dans le contenu V et le signal audio correspondant à la composante audio du flux F2 pour chaque intervalle déterminé dans le contenu V est extrait du flux F2 représentatif du contenu V.

La **figure 9a** est un diagramme représentant des intervalles déterminés dans un deuxième flux F2 représentatif du contenu V.

Des intervalles IV sont obtenus par échantillonnage du signal audio représentatif du contenu V dans le deuxième flux F2. Les intervalles de temps IV sont d'une durée Y prédéterminée, par exemple de quelques millisecondes. Les intervalles de temps IV sont régulièrement espacés dans le temps. L'espace temporel entre deux intervalles de temps IV consécutifs est d'une durée prédéterminée Z2.

Les intervalles de temps IV sont par exemple disjoints.

Des intervalles de temps $IV_1$, $IV_2$ ... $IV_i$ ... sont ainsi déterminés.

Un intervalle de temps $IV_i$ commence à un instant $A_i$ et se termine à un instant $B_i = A_i + Y$.

L'instant $A_i$ de début de l'intervalle $IV_i$ est par exemple une valeur représentant l'espace temporel entre le début du contenu V et le début de l'intervalle $IV_i$

Puis une signature $SV_i$ est déterminée pour chaque intervalle $IV_i$.

La signature $SV_i$ est par exemple un mot de 32 bits.

Une sous empreinte $EV_i$ est déterminée pour chaque intervalle $IV_i$. Une sous empreinte $EV_i$ déterminée pour un intervalle $IV_i$ comprend d'une part, la signature $SV_i$ et d'autre part, la date $A_i$ de début de l'intervalle $IV_i$. Autrement dit, une sous empreinte est ici une signature datée.

L'empreinte de référence EPR est une suite ordonnée comprenant les sous empreintes $EV_i$ calculées.

Un mode de réalisation de l'étape ST7 d'obtention d'une empreinte numérique EPX représentant un extrait du premier flux F1 va maintenant être décrit.

La **figure 9b** est un diagramme représentant des intervalles déterminés dans un premier flux F1 représentatif du contenu V.

Des intervalles de temps IE sont déterminés et le signal audio correspondant à chaque intervalle de temps IE est extrait du signal reçu E.

Le début du premier intervalle correspond, par exemple, au début du signal E.

Les intervalles de temps IE sont d'une durée égale à la durée Y des intervalles de temps IV déterminés lors de l'étape ST2 et l'espace temporel entre deux intervalles consécutifs est de durée prédéterminée Z1 telle que la durée prédéterminée Z2 correspondant à l'espace temporel séparant deux intervalles de temps IV déterminés lors de l'étape ST2 est un multiple β de la durée prédéterminée Z1.

Par exemple, la valeur de β est 10 et Z2 = 10 * Z1.

Un intervalle $IE_i$ commence à un instant $C_i$ et se termine à un instant $D_i = C_i + Y$.

Puis une signature $SE_i$ est déterminée pour chaque intervalle $IE_i$.

Les signatures $SE_i$ sont calculées en utilisant la même méthode que celle utilisées pour calculer les signatures SVi.

Une sous empreinte EEi est déterminée pour chaque intervalle IEi. Une sous empreinte EEi déterminée pour un intervalle IEi comprend d'une part, la signature SEi et d'autre part, la date Ci de début de l'intervalle IEi.

N intervalles IEi et N sous empreintes EEi sont ainsi déterminés.

L'empreinte EPX est constituée des N sous empreintes EEi déterminées.

L'empreinte EPX est une suite ordonnée des N sous empreintes EEi déterminées.

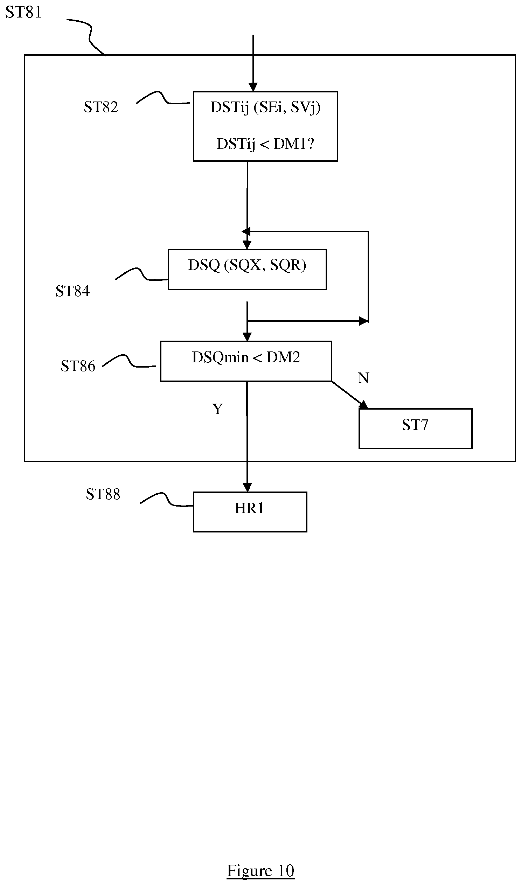

Un mode de réalisation de l'étape d'obtention d'une deuxième estampille temporelle va maintenant être décrit en référence à la **figure 10.**

Lors d'une étape ST81, une séquence de signatures consécutives de l'empreinte de référence EPR est sélectionnée en fonction d'un critère de similitude entre la séquence sélectionnée et des signatures de l'empreinte EPX déterminée lors de l'étape ST7.

L'étape ST81 comporte des sous étapes ST82 à ST85.

Lors d'une sous étape ST82, au moins un couple comportant une signature de l'empreinte EPR et une signature de l'empreinte EPX est sélectionné en fonction d'un premier critère de similitude entre une signature de l'empreinte EPR et une signature de l'empreinte EPX

Par exemple, chaque signature de l'empreinte EPX est comparée à chaque signature de l'empreinte de référence EPR.

La comparaison comprend par exemple un calcul d'une distance DSTij entre chaque signature SEi de l'empreinte EPX et chaque signature SVj de l'empreinte de référence EPR.

Puis, les distances DSTij calculées sont ensuite comparées à une valeur de seuil DM1 prédéterminée.

Les couples de signatures SEi, SVj pour lesquels la distance DSTij est inférieure au seuil DM1 sont sélectionnées.

Lors d'une étape ST84, pour un couple de signature SEi, SVj pour lequel la distance DSTij est inférieure au seuil DM1, une deuxième comparaison est effectuée.

La deuxième comparaison comporte un calcul de distance DSQ entre une première séquence de signatures SQX comprenant des signatures de l'empreinte EPX et une deuxième séquence de signatures SQR comprenant des signatures de l'empreinte de référence EPR.

La première séquence SQX comporte la signature SEi du couple de signatures SEi, SVj sélectionné lors de l'étape ST82. La signature SEi est la signature de rang i dans l'empreinte EPX.

Elle comporte également les signatures SEz de l'empreinte EPX pour lesquelles le rang z dans l'empreinte EPX est une valeur $\alpha$ égale à la valeur (h\*$\beta$ + i) avec h un entier relatif et $\beta$ telle que décrit précédemment.

On obtient ainsi k signatures dont k1 signatures de rang inférieur à i, la signature SEi de rang i et k2 signatures de rang supérieur à i.

La deuxième séquence SQR comporte k signatures consécutives de l'empreinte de référence EPR et une des signatures de la deuxième séquence SQ2 est la signature SVj du couple de signatures SEi, SVj.

La deuxième séquence SQR comporte k1 signatures de rang inférieur à j, la signature SVj de rang j et k2 signatures de rang k2.

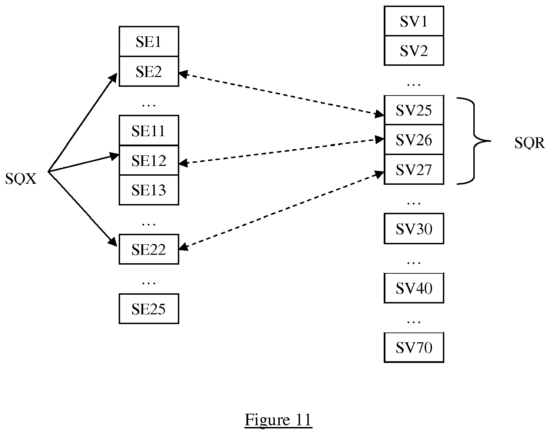

La **figure 11** illustre un exemple de première séquence SQX et de deuxième séquence SQR.

Dans cet exemple, l'empreinte EPX comporte 25 signatures SE1 à SE25 et l'empreinte EPR comporte 70 signatures SV1 à SV70. Le couple sélectionné lors de l'étape ST82 est le couple SE12,SV26. La première séquence SQX contient les signatures SE2, SE12 et SE22. La deuxième séquence SQR contient les signatures SV25, SV26 et SV27.

La distance DSQ entre la première séquence SQX et la deuxième séquence SQR est par exemple une distance de Hamming.

La sous étape ST84 est réitérée.

On obtient ainsi autant de distances que de couples SEi,SVj sélectionnés lors de la sous étape ST82.

Lors d'une sous étape ST86, les distances obtenues sont comparées entre elles et la distance DSQmin la plus petite parmi les distances DSQ obtenues est comparée à une valeur de seuil DM2 prédéterminé.

Si la distance DSQmin est supérieure au seuil DM2, cela signifie qu'aucune correspondance entre l'empreinte EPX et l'empreinte de référence EPR est trouvée. Dans ce cas, l'étape ST7 d'obtention de premières données représentant un nouvel extrait est réitérée ou un message d'échec est affiché sur l'écran E du terminal M2.

Si la distance est inférieure au seuil DM2, la deuxième séquence SQR pour laquelle la distance DSQ obtenue est la plus petite est sélectionnée.

Lors d'une étape ST88, la deuxième estampille temporelle HR1 est déterminée. La deuxième estampille temporelle est la date de la sous empreinte la plus ancienne de la deuxième séquence SQR, c'est-à-dire la date associée à la signature de la deuxième séquence SQR ayant le rang le plus faible.

Dans le mode de réalisation décrit, les empreintes sont des suites ordonnées de signatures datées.

A titre d'alternative, les empreintes ne contiennent pas de date et la date d'une sous empreinte d'une suite est déterminée en fonction de son rang dans la suite.

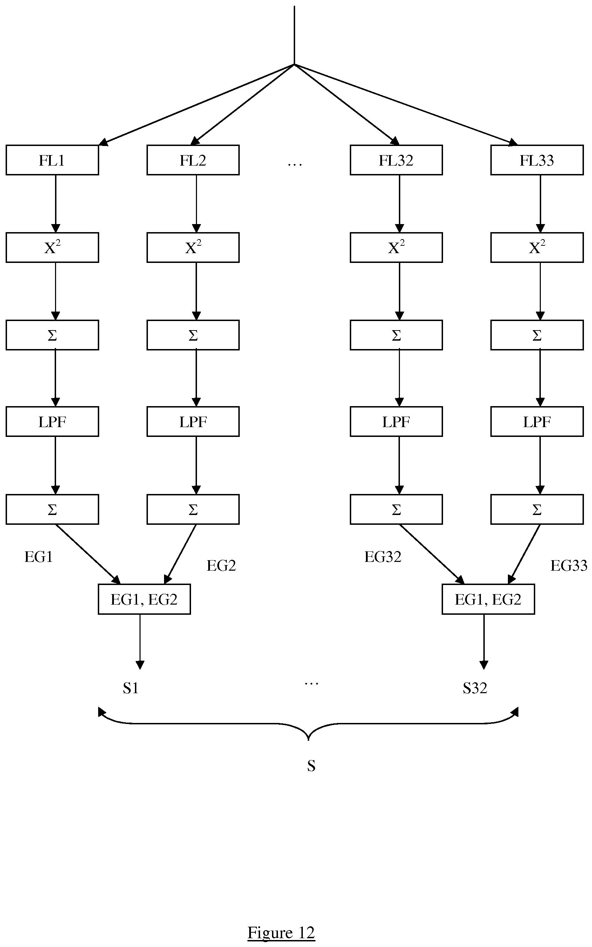

Un mode de réalisation particulier du calcul d'une signature va maintenant être décrit en référence à la **figure 12.**

Le signal audio correspondant un intervalle prédéterminé IT est filtré respectivement par un banc de filtres montés en parallèle. Le banc de filtres comprend un nombre prédéterminé de filtres à réponse impulsionnelle infinie ou filtre RII (en anglais infinite impulse response filter ou IIR filter), par exemple par 33 filtres FL1, FL2...FL33.

Chaque filtre RII est par exemple un résonateur de second ordre de fréquence centrale prédéterminée.

Les fréquences centrales des 33 filtres sont réparties de façon logarithmique entre 300 et 3000 Hz (pour Hertz). Une énergie instantanée de chaque signal obtenu en sortie de chaque filtre est calculée par élévation à la puissance deux du signal obtenu.

Puis les énergies obtenues en sortie de chaque filtre sont accumulées sur une fenêtre temporelle de première durée prédéterminée, par exemple 12 millisecondes.

A titre optionnel, un filtre passe bas LPF est utilisé en complément pour filtrer les variations brusques de l'énergie dues aux perturbations externes. Le filtre passe bas est par exemple un filtre du type $y(n) = (1-\alpha) y(n-1) + \alpha x(n)$ avec $x(n)$ le signal d'entrée du filtre correspondant à la fenêtre temporelle de première durée, $y(n)$ le signal de sortie du filtre pour la fenêtre temporelle considérée, $y(n-1)$ est le signal de sortie du filtre pour la fenêtre temporelle précédente et $\alpha$ est une valeur prédéterminée, par exemple $\alpha=0,7$.

Les énergies obtenues sont ensuite accumulées sur des fenêtres temporelles d'une deuxième durée prédéterminée, par exemple 516 millisecondes, avec un pas d'avancement correspondant à la première durée. Par exemple, la fenêtre temporelle est de type sinusoïdal à 43 coefficients.

On obtient ainsi 33 valeurs d'énergies EG1, EG2...EG33.

Chaque valeur $(EGi - EG(i+1))$ est ensuite comparée à la valeur $(EGi - EG(i+1))$ calculée précédemment pour un échantillon précédent pour i variant de 1 à 32.

Puis, une valeur de comparaison Si est déterminée en fonction du résultat de la comparaison.

Par exemple, la valeur de comparaison Si est une valeur binaire.

Par exemple, la valeur de comparaison Si est égale à 0 si le résultat de la comparaison est une valeur positive et est égale à 1 si le résultat de la comparaison est une valeur négative.

On obtient ainsi 32 valeurs de comparaison S1, S2, S32.

Une signature S est un mot de 32 bits obtenu par concaténation des valeurs de comparaison S1, S2...S32 obtenues.

Un quatrième mode de réalisation d'un procédé de déclenchement d'au moins une action relative à un flux, mis en dans le système SY2 va maintenant être décrit en référence à la

**figure 13.**

Dans ce mode de réalisation, le contenu V comprend une composante audio et une composante vidéo.

Dans ce mode de réalisation, plusieurs contenus complémentaires CB1, CB2...CBi... sont enregistrés dans la base de données BC.

Chaque contenu complémentaire CBi est un contenu audio relatif à un contenu prédéterminé V.

Chaque contenu complémentaire CBi décrit par exemple les personnages, les actions et les situations relatifs à une portion du contenu V.

Typiquement, chaque contenu complémentaire CBi contient des informations destinées à rendre le contenu V accessible à des personnes aveugles ou malvoyantes.

A titre d'alternative, un seul contenu complémentaire CB est enregistré pour le contenu V dans la base de données BC.

Par exemple, des informations destinées à rendre le contenu V accessible à des personnes aveugles ou malvoyantes sont regroupées sous la forme d'un seul contenu complémentaire CB.

Dans un autre exemple, le contenu complémentaire CB est un contenu audio correspondant à la traduction dans une autre langue de la composante audio du contenu V.

Lors d'une étape préalable SV0, une date de restitution prévue TBi est enregistrée en association avec un identifiant IdCBi de chaque contenu complémentaire CBi, par exemple dans la base de données BT.

Des dates de restitution prévue TB1, TB2...TBi...sont ainsi enregistrées respectivement en association avec des identifiants IdCB1, IdCB2...IdCBi...des contenus complémentaires CB1, CB2...CBi...

Chaque date de restitution prévue TBi pour le contenu complémentaire CBi est par exemple un délai déterminé par rapport au début du contenu V.

Lors d'une étape préalable SV1, similaire à l'étape préalable ST1 du mode de réalisation précédent, le module de détermination DTS du serveur S2 détermine une empreinte de référence EPR pour le contenu V. et l'enregistre dans une mémoire accessible par le serveur S2.

L'empreinte de référence EPR représente des données représentant une pluralité d'extraits représentatifs d'un deuxième flux F2 représentatif du contenu V.

Lors d'une étape SV2, le module de traitement de requêtes TTQ du terminal M2 transmet à destination du serveur S2 une demande DM2 d'une empreinte de référence pour le contenu V.

L'étape SV2 est suivie d'une étape SV3 lors de laquelle le serveur S2 transmet l'empreinte de référence EPR déterminée pour le contenu V lors de l'étape préalable SV1.

L'étape SV3 est suivie d'une étape SV4 lors de laquelle le terminal M2 reçoit, en réponse à la demande DM2, l'empreinte de référence EPR déterminée pour le contenu V lors de l'étape préalable SV1.

Lors d'une étape SV5, le module de traitement de requêtes TTQ du terminal M2 transmet à destination du serveur S2 une demande DM3 de contenus complémentaires pour le contenu V.

L'étape SV5 est suivie d'une étape SV6 lors de laquelle le terminal M2 reçoit, en réponse à la demande DM3, d'une part les contenus complémentaires CB1, CB2...CBi... et d'autre part les dates de restitution TB1, TB2...TBi... et les identifiants associés IdCB1, IdCB2... IdCBi... enregistrés pour les contenus complémentaires CB1, CB2...

Lors d'une étape SV7, similaire à l'étape ST5 du mode de réalisation précédent, le premier flux F1 représentatif du contenu V est restitué par le dispositif de restitution TV.

Lors d'une étape SV8, le module d'obtention OBT du dispositif de déclenchement DC du terminal M2 obtient des données représentant un extrait restitué du premier flux F1.

Plus précisément, le module d'obtention OBT du dispositif de déclenchement DC du terminal M2 obtient, à un instant HM1, un extrait restitué E du premier flux F1 en cours de restitution sur le dispositif de restitution TV.

L'extrait E obtenu est par exemple un extrait d'une composante audio du premier flux F1 restitué par le dispositif de restitution TV.

L'extrait E est par exemple obtenu par enregistrement via le microphone MP du terminal M2, entre des instants HM1 et HM2, d'un signal audio émis par le dispositif de restitution TV.

Puis, le module de détermination d'empreintes EMP du dispositif de déclenchement DC du terminal M2 détermine une empreinte numérique EPX pour l'extrait E obtenu. L'empreinte numérique EPX représente des premières données représentant l'extrait E du premier flux F1.

Lors de l'étape SV8, le module d'obtention OBT du dispositif de déclenchement DC du terminal M2 obtient également une première estampille temporelle.

Par exemple, la première estampille temporelle de l'extrait E est l'instant HM1 de début d'enregistrement de cet extrait par le terminal M2, c'est-à-dire la date de début de restitution de l'extrait E par le dispositif de restitution TV.

Lors d'une étape SV9, le module de détermination d'un instant de déclenchement DTI du dispositif de déclenchement DC du terminal M2 obtient un instant de déclenchement HD. L'instant de déclenchement HD est déterminé en fonction de la première estampille temporelle HM1 et d'une deuxième estampille temporelle HR1. L'instant de déclenchement HD est également déterminé en fonction d'au moins une des dates de restitution TBi prévues pour les contenus complémentaires CB1, CB2...CBi.

La deuxième estampille temporelle HR1 est associée à des deuxièmes données DE2. Les deuxièmes données DE2 représentent l'extrait E et sont obtenues à partir d'un deuxième flux F2 représentatif du contenu V, par exemple une version du contenu V à disposition du serveur S.

L'étape SV9 d'obtention d'un instant de déclenchement HD comprend une détermination de la deuxième estampille temporelle HR1 par le terminal M2.

La détermination de la deuxième estampille temporelle HR1 comprend dans le mode de réalisation décrit, une étape de sélection d'une séquence de signatures consécutives d'une suite ordonnée de signatures datées déterminée pour le contenu V représenté dans le deuxième flux F2. La deuxième estampille temporelle HR1 est la date associée à la première signature de la séquence sélectionnée, c'est-à-dire dans le mode de réalisation décrit un délai calculé par rapport au début du contenu V.

Un mode de réalisation particulier de l'étape de détermination de la deuxième estampille temporelle HR1 est décrit dans la description en référence à la figure 10.

Puis, le module de détermination d'un instant de déclenchement DTI du dispositif de déclenchement DC du terminal M2 sélectionne parmi les dates TBi, une date non encore écoulée, par exemple la plus petite des dates TBi supérieure à la deuxième estampille temporelle HR1.

A titre d'alternative, le module de détermination d'un instant de déclenchement DTI du dispositif de déclenchement DC du terminal M2 sélectionne parmi les dates TBi, une date non encore écoulée telle que le délai DEL entre cette date TBi et la deuxième estampille HR1 est supérieure à une valeur prédéterminée. Ceci permet de tenir compte des temps de traitement.

Puis, le module de détermination d'un instant de déclenchement DTI du dispositif de déclenchement DC du terminal M2 détermine l'instant de déclenchement HD.

L'instant de déclenchement HD est obtenu par la formule :

$$HD = HM1 + DEL = HM1 + (TBi\text{-}HR1).$$

A titre d'alternative, plusieurs dates TBi sont sélectionnées et plusieurs instants de déclenchement sont déterminés.

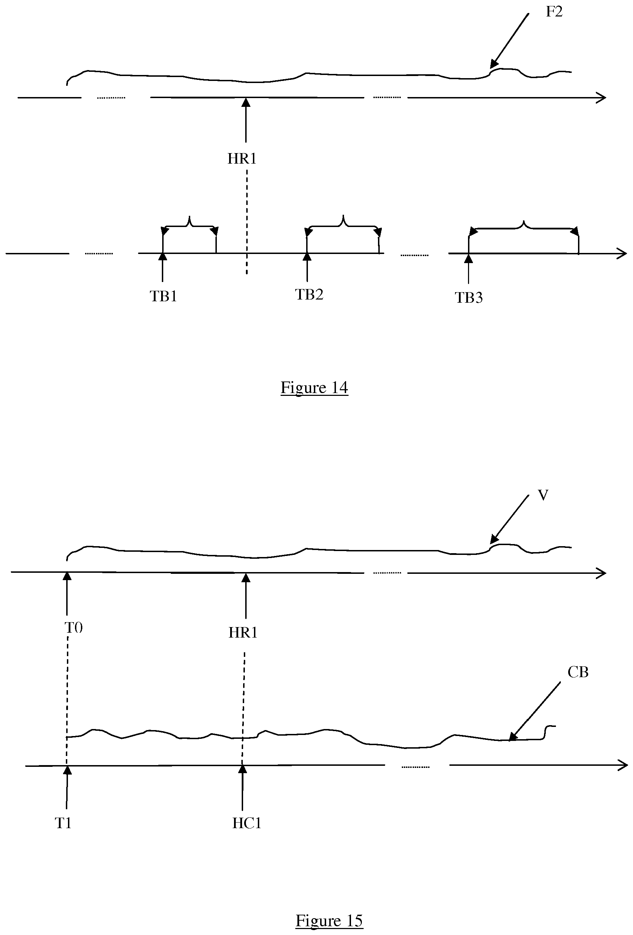

La figure 14 comporte d'une part un premier axe sur lequel est représenté un flux représentant le contenu V et d'autre part un deuxième axe sur lequel sont représentés trois contenus complémentaires CB1, CB2 et CB3.

Une deuxième estampille temporelle HR1 déterminée pour le contenu V est également représentée sur le premier axe.

Dans l'exemple illustré par la figure 14, le contenu complémentaire sélectionné en fonction de la deuxième estampille est le contenu complémentaire CB2 et l'instant de déclenchement HD correspond à la première estampille HM1 augmentée du délai entre la deuxième estampille temporelle HR1 et la date TB2 du contenu complémentaire CB2.

Lors d'une étape SV10, réalisée à partir de l'instant de déclenchement HD obtenu lors de l'étape SV9, le module de déclenchement DCL du dispositif de déclenchement DC du terminal M2 commande le déclenchement de la restitution d'un contenu complémentaire par le module de restitution RST du terminal M2.

Le contenu complémentaire restitué est le contenu complémentaire pour lequel l'identifiant est associé à l'instant de déclenchement HD, par exemple le contenu complémentaire CB2.

La restitution du contenu complémentaire CB2 représente une action AC3 déclenchée par le dispositif de déclenchement DC.

Ainsi, le contenu complémentaire CB2 est restitué de façon synchronisée avec le premier flux F1 restitué par le dispositif de restitution TV.

Un utilisateur du terminal M2, à proximité du dispositif de restitution TV peut ainsi obtenir un contenu complémentaire en parfaite synchronisation avec le premier flux F1 restitué par le dispositif de restitution TV.

Dans le cas où plusieurs instants de déclenchement sont déterminés, les différents contenus complémentaires associés sont restitués respectivement aux instants de déclenchement déterminés.

Dans une variante du mode de réalisation, un seul contenu complémentaire CB est enregistré pour le contenu V.

La **figure 15** illustre un exemple de contenu complémentaire V et d'un contenu complémentaire CB.

Une estampille temporelle T0 est associée au début du contenu V et une estampille temporelle T1 est associée au début du contenu complémentaire CB.

Dans l'exemple illustré par la figure 15, les estampilles temporelles T0 et T1 correspondent au même instant et la durée du contenu complémentaire CB est égale à la durée du contenu V.

A titre d'alternative, il existe un délai entre l'estampille temporelle T0 et l'estampille temporelle T1.

Egalement à titre d'alternative, le contenu V et le contenu complémentaire CB ont une durée différente.

Dans ce mode de réalisation, la deuxième estampille temporelle HR1 déterminée représente un délai par rapport à l'estampille temporelle T0 de début du contenu V.

Les estampilles temporelles T0 et T1 étant confondues, l'estampille temporelle HR1 correspond à une estampille temporelle HC1 dans le contenu complémentaire CB telle que le délai par rapport à l'estampille T1 représenté par l'estampille HC1 soit égal au délai par rapport à l'estampille T0 représenté par la deuxième estampille HR1.

L'action AC3 déclenchée est la restitution du contenu complémentaire à partir d'une position dans le contenu complémentaire CB correspondant à l'estampille temporelle HC1. La position dans le contenu complémentaire CB est déterminée en fonction de la deuxième estampille temporelle HR1.

Ladite restitution commence instantanément, c'est-à-dire dès que l'estampille temporelle HR1 est déterminée.

A titre d'alternative, un délai peut être ajouté à l'estampille temporelle HC1 pour prendre en compte les temps de traitement.

## Revendications

1. Procédé de déclenchement d'au moins une action relative à un premier flux (F, F1) représentatif d'un contenu multimédia (V) et en cours de restitution par un dispositif de restitution (TV), **caractérisé en ce qu'**il comporte les étapes suivantes, mises en par un terminal (M, M1, M2, M3) :

   - obtention (E2, E202, ST8) de premières données (DE, DE1) représentant un extrait (E) du contenu multimédia (V), ledit extrait (E) étant obtenu par enregistrement par un microphone (MP) du terminal (M, M1, M2, M3) d'au moins une composante audio d'un signal restitué par ledit dispositif de restitution (TV) lors de la restitution du premier flux (F, F1), et d'une première estampille temporelle (H1, HM1) de restitution dudit extrait (E) par ledit dispositif de restitution (TV);
   - obtention (E16, E214, ST9) d'au moins un instant de déclenchement (T, HD) déterminé en fonction d'une date prévue pour ladite action et d'un intervalle de temps entre ladite première estampille temporelle (H1, HM1) et une deuxième estampille temporelle (HS1, HR1), ladite deuxième estampille temporelle définissant une date dudit extrait (E) dans un deuxième flux (F2) représentatif dudit contenu (V) et à disposition d'un serveur distant (S), et étant associée à des deuxièmes données représentant ledit extrait (E), lesdites deuxièmes données étant obtenues par le serveur distant (S) à partir dudit deuxième flux (F2);
   - déclenchement (E18, E216, ST10) d'au moins une action (AC, AC2) à un dit instant de déclenchement obtenu.

2. Procédé de déclenchement selon la revendication 1 dans lequel une dite action est une restitution par ledit terminal d'un contenu complémentaire (C1) à un contenu du premier flux (F, F1) en cours de restitution sur le dispositif de restitution (TV).

3. Procédé de déclenchement selon la revendication 1 dans lequel la détermination dudit instant de déclenchement comporte une étape de comparaison desdites premières données avec les deuxièmes données obtenues à partir dudit deuxième flux (F2).

4. Procédé de déclenchement selon la revendication 1 dans lequel ledit premier flux (F, F1) comprenant au moins une composante audio les premières données sont une empreinte numérique déterminée à partir d'un extrait d'au moins une des composantes dudit premier flux (F, F1).

5. Procédé de déclenchement selon la revendication 1 **caractérisé en ce qu'**il comprend en outre une étape d'obtention (ST4) d'une pluralité de données représentant une pluralité d'extraits représentatifs du deuxième flux (F2) et **en ce que** l'étape d'obtention (ST8) d'un instant de déclenchement (HD) comprend une étape de recherche desdites deuxièmes données parmi la pluralité de données.

6. Procédé de déclenchement selon la revendication 5 dans lequel les premières données comprennent une première suite ordonnée (EPX) de signatures datées et dans lequel les données représentant une pluralité d'extraits représentatifs du deuxième flux (F2) comprennent au moins une deuxième suite ordonnée de signatures datées.

7. Procédé de déclenchement selon la revendication 6 dans lequel l'étape de recherche comprend une étape de sélection d'une séquence de signatures consécutives d'une dite deuxième suite en fonction d'un critère de similitude entre ladite séquence et des signatures de la première suite et dans lequel ladite deuxième estampille temporelle est la date associée à la première signature de la séquence sélectionnée.

8. Procédé de déclenchement selon la revendication 7 dans lequel la sélection de la séquence comporte une première étape de sélection d'au moins un couple de signatures comportant une signature d'une dite deuxième suite et une signature de la dite première suite en fonction d'un critère de similitude entre une signature de la deuxième suite et une signature de la première suite, une étape de comparaison d'une séquence de signatures consécutives de ladite deuxième suite, ladite séquence comprenant une desdites au moins une signature sélectionnée, avec des signatures de la première suite et ladite séquence est sélectionnée en fonction du résultat de la comparaison.

9. Procédé de déclenchement selon la revendication 1 **caractérisé en ce qu'**il comprend en outre une étape de transmission (E6) d'une requête (RQ1) contenant lesdites premières données au serveur distant (S) et **en ce que** la deuxième estampille temporelle est une estampille temporelle (HS1) de réception dudit extrait (E) dans ledit deuxième flux (F2) reçu par ledit serveur distant (S).

10. Procédé de déclenchement selon la revendication 9 dans lequel l'étape d'obtention d'un instant de déclenchement comprend une étape de réception d'une information temporelle déterminée en fonction de ladite deuxième estampille temporelle (HS1).

11. Procédé de déclenchement selon la revendication 1 dans laquelle ladite action est une restitution d'un contenu complémentaire (C1) à partir d'une position dans ledit contenu complémentaire (C1) déterminée en fonction de la deuxième estampille temporelle (HR1).

12. Dispositif de déclenchement (D) d'au moins une action relative à un premier flux (F, F1) représentatif d'un contenu multimédia (V) et en cours de restitution par un dispositif de restitution (TV), **caractérisé en ce qu'**il comporte:

    - un microphone (MP) ;
    - un module d'obtention (OBT) de premières données (DE, DE1) représentant un extrait (E) du contenu multimédia (V), configuré pour obtenir ledit extrait (E) par enregistrement par le microphone (MP) d'au moins une composante audio d'un signal restitué par ledit dispositif de restitution (TV) lors de la restitution du premier flux (F, F1), et une première estampille temporelle (H1, HM1) de restitution dudit extrait (E) par ledit dispositif de restitution (TV);
    - un module d'obtention (INT, DCI) d'au moins un instant de déclenchement (T, HD) déterminé en fonction d'une date prévue pour ladite action et d'un intervalle de temps entre ladite première estampille temporelle (H1, HM1) et une deuxième estampille temporelle (HS1, HR1) ladite deuxième estampille temporelle définissant une date dudit extrait (E) dans un deuxième flux (F2) représentatif dudit contenu (V) et à disposition d'un serveur distant (S), et étant associée à des deuxièmes données représentant ledit extrait (E), lesdites deuxièmes données étant obtenues par le serveur distant (S) à partir dudit deuxième flux (F2);
    - un module de déclenchement (DCL) d'au moins une action (AC, AC2) à un dit instant de déclenchement obtenu.

13. Terminal (M, M1, M2, M3) **caractérisé en ce qu'**il comporte un dispositif de déclenchement selon la revendication 12.

14. Produit programme d'ordinateur comprenant des instructions pour mettre en les étapes d'un procédé de déclenchement d'au moins une action relative à un premier flux (F, F1) en cours de restitution, selon la revendication 1, lorsqu'il est chargé et exécuté par un processeur.

**Patentansprüche**

1. Verfahren zum Auslösen mindestens einer Handlung in Bezug auf einen ersten Strom (F, F1), der einen Multimediainhalt (V) darstellt, und im Verlauf der Wiederherstellung durch eine Wiederherstellungsvorrichtung (TV), **dadurch gekennzeichnet, dass** es die folgenden Schritte umfasst, die durch ein Endgerät (M, M1, M2, M3) ausgeführt werden:

- Erhalten (E2, E202, ST8) von ersten Daten (DE, DE1), die einen Auszug (E) des Multimediainhalts (V) darstellen, wobei der Auszug (E) durch Aufzeichnung von mindestens einer Audiokomponente eines Signals durch ein Mikrophon (MP) des Endgeräts (M, M1, M2, M3) erhalten wird, das durch die Wiederherstellungsvorrichtung (TV) bei der Wiederherstellung des ersten Stroms (F, F1) wiederhergestellt wird, und eines ersten Wiederherstellungszeitstempels (H1, HM1) des Auszugs (E) durch die Wiederherstellungsvorrichtung (TV);
- Erhalten (E16, E214, ST9) mindestens eines Auslösezeitpunkts (T, HD), der in Abhängigkeit von einem für die Handlung vorgesehenen Datum und einem Zeitintervall zwischen dem ersten Zeitstempel (H1, HM1) und einem zweiten Zeitstempel (HS1, HR1) bestimmt wird, wobei der zweite Zeitstempel ein Datum des Auszugs (E) in einem zweiten Strom (F2) definiert, der den Inhalt (V) darstellt und zur Verfügung für einen entfernten Server (S) bestimmt ist, und zweiten Daten zugeordnet ist, die den Auszug (E) darstellen, wobei die zweiten Daten durch den entfernten Server (S) aus dem zweiten Strom (F2) erhalten werden;
- Auslösen (E18, E216, ST10) mindestens einer Handlung (AC, AC2) zu einem erhaltenen Auslösezeitpunkt.

2. Auslöseverfahren nach Anspruch 1, in dem eine Handlung eine Wiederherstellung eines zu einem Inhalt des ersten Stroms (F, F1) komplementären Inhalts (C1) im Verlauf der Wiederherstellung an der Wiederherstellungsvorrichtung (TV) durch das Endgerät ist.

3. Auslöseverfahren nach Anspruch 1, in dem die Bestimmung des Auslösezeitpunkts einen Schritt zum Vergleichen der ersten Daten mit den zweiten Daten umfasst, die aus dem zweiten Strom (F2) erhalten werden.

4. Auslöseverfahren nach Anspruch 1, in dem der erste Strom (F, F1) mindestens eine Audiokomponente umfasst, wobei die ersten Daten ein digitaler Abdruck sind, der aus einem Auszug von mindestens einer der Komponenten des ersten Stroms (F, F1) bestimmt wird.

5. Auslöseverfahren nach Anspruch 1, **dadurch gekennzeichnet, dass** es außerdem einen Schritt zum Erhalten (ST4) von mehreren Daten umfasst, die mehrere Auszüge darstellen, die den zweiten Strom (F2) darstellen, und dass der Schritt zum Erhalten (ST8) eines Auslösezeitpunkts (HD) einen Schritt zum Suchen der zweiten Daten unter den mehreren Daten umfasst.

6. Auslöseverfahren nach Anspruch 5, in dem die ersten Daten eine erste geordnete Folge (EPX) von datierten Signaturen umfassen und in dem die Daten, die mehrere Auszüge darstellen, die den zweiten Strom (F2) darstellen, mindestens eine zweite geordnete Folge von datierten Signaturen umfassen.

7. Auslöseverfahren nach Anspruch 6, in dem der Schritt des Suchens einen Schritt zum Auswählen einer Sequenz von aufeinander folgenden Signaturen einer zweiten Folge in Abhängigkeit von einem Ähnlichkeitskriterium zwischen der Sequenz und Signaturen der ersten Folge umfasst und in dem der zweite Zeitstempel das der ersten Signatur der ausgewählten Sequenz zugeordnete Datum ist.

8. Auslöseverfahren nach Anspruch 7, in dem die Auswahl der Sequenz einen ersten Schritt zur Auswahl mindestens eines Paars von Signaturen mit einer Signatur einer zweiten Folge und einer Signatur der ersten Folge in Abhängigkeit von einem Ähnlichkeitskriterium zwischen einer Signatur der zweiten Folge und einer Signatur der ersten Folge, einen Schritt zum Vergleichen einer Sequenz von aufeinander folgenden Signaturen der zweiten Folge, wobei die Sequenz eine der mindestens einen ausgewählten Signatur umfasst, mit Signaturen der ersten Folge umfasst und die Sequenz in Abhängigkeit vom Ergebnis des Vergleichs ausgewählt wird.

9. Auslöseverfahren nach Anspruch 1, **dadurch gekennzeichnet, dass** es außerdem einen Schritt zur Übertragung (E6) einer Anforderung (RQ1), die die ersten Daten enthält, zum entfernten Server (S) umfasst, und dass der zweite Zeitstempel ein Zeitstempel (HS1) des Empfangs des Auszugs (E) im zweiten Strom (F2) ist, der durch den entfernten Server (S) empfangen wird.

10. Auslöseverfahren nach Anspruch 9, in dem der Schritt zum Erhalten eines Auslösezeitpunkts einen Schritt zum Empfangen einer Zeitinformation umfasst, die in Abhängigkeit vom zweiten Zeitstempel (HS1) bestimmt wird.

11. Auslöseverfahren nach Anspruch 1, in dem die Handlung eine Wiederherstellung eines komplementären Inhalts (C1) aus einer Position in dem komplementären Inhalt (C1) ist, die in Abhängigkeit vom zweiten Zeitstempel (HR1) bestimmt wird.

**12.** Vorrichtung zum Auslösen (D) mindestens einer Handlung in Bezug auf einen ersten Strom (F, F1), der einen Multimediainhalt (V) darstellt, und im Verlauf einer Wiederherstellung durch eine Wiederherstellungsvorrichtung (TV), **dadurch gekennzeichnet, dass** sie umfasst:

ein Mikrophon (MP);

- ein Modul zum Erhalten (OBT) von ersten Daten (DE, DE1), die einen Auszug (E) des Multimediainhalts (V) darstellen, das zum Erhalten des Auszugs (E) durch Aufzeichnung mindestens einer Audiokomponente eines Signals durch das Mikrophon (MP), das durch die Wiederherstellungsvorrichtung (TV) bei der Wiederherstellung des ersten Stroms (F, F1) wiederhergestellt wird, und eines ersten Wiederherstellungszeitstempels (H1, HM1) des Auszugs (E) durch die Wiederherstellungsvorrichtung (TV) konfiguriert ist;
- ein Modul zum Erhalten (INT, DCI) mindestens eines Auslösezeitpunkts (T, HD), der in Abhängigkeit von einem für die Handlung vorgesehenen Datum und einem Zeitintervall zwischen dem ersten Zeitstempel (H1, HM1) und einem zweiten Zeitstempel (HS1, HR1) bestimmt wird, wobei der zweite Zeitstempel ein Datum des Auszugs (E) in einem zweiten Strom (F2), der den Inhalt (V) darstellt und zur Verfügung für einen entfernten Server (S) bestimmt ist, definiert, und zweiten Daten zugeordnet ist, die den Auszug (E) darstellen, wobei die zweiten Daten durch den entfernten Server (S) aus dem zweiten Strom (F2) erhalten werden;
- ein Modul zum Auslösen (DCL) mindestens einer Handlung (AC, AC2) zu einem erhaltenen Auslösezeitpunkt.

**13.** Endgerät (M, M1, M2, M3), **dadurch gekennzeichnet, dass** es eine Auslösevorrichtung nach Anspruch 12 umfasst.

**14.** Computerprogrammprodukt, das Befehle enthält, um die Schritte eines Verfahrens zum Auslösen mindestens einer Handlung in Bezug auf einen ersten Strom (F, F1) im Verlauf einer Wiederherstellung nach Anspruch 1 auszuführen, wenn es geladen und durch einen Prozessor ausgeführt wird.

## Claims

**1.** Method for triggering at least one action relating to a first stream (F, F1) representative of a multimedia content (V) and undergoing rendition by a rendition device (TV), **characterized in that** it comprises the following steps, implemented by a terminal (M, M1, M2, M3):

- obtaining (E2, E202, ST8) first data (DE, DE1) representing an extract (E) from the multimedia content (V), said extract (E) being obtained by recording through a microphone (MP) of the terminal (M, M1, M2, M3) at least one audio component of a signal rendered by said rendition device (TV) during the rendition of the first stream (F, F1), and a first timestamp (H1, HM1) of rendition of said extract (E) by said rendition device (TV);
- obtaining (E16, E214, ST9) at least one instant of triggering (T, HD) determined as a function of a date scheduled for said action and of a time interval between said first timestamp (H1, HM1) and a second timestamp (HS1, HR1), said second timestamp defining a date of said extract (E) in a second stream (F2) representative of said content (V) and at the disposal of a remote server (S), and being associated with second data representing said extract (E), said second data being obtained by the remote server (S) from said second stream (F2);
- triggering (E18, E216, ST10) at least one action (AC, AC2) at a said instant of triggering obtained.

**2.** Triggering method according to Claim 1, in which a said action is a rendition by said terminal of a content (C1) complementary to a content of the first stream (F, F1) undergoing rendition on the rendition device (TV).

**3.** Triggering method according to Claim 1, in which the determination of said triggering instant comprises a step of comparing said first data with the second data obtained from said second stream (F2).

**4.** Triggering method according to Claim 1, in which, said first stream (F, F1) comprising at least one audio component, the first data are a digital imprint determined on the basis of an extract from at least one of the components of said first stream (F, F1).

**5.** Triggering method according to Claim 1, **characterized in that** it furthermore comprises a step (ST4) of obtaining a plurality of data representing a plurality of extracts representative of the second stream (F2) and **in that** the step (ST8) of obtaining an instant of triggering (HD) comprises a step of searching for said second data amongst the plurality of data.

**6.** Triggering method according to Claim 5, in which the first data comprise a first ordered string (EPX) of dated signatures and in which the data representing a plurality of extracts representative of the second stream (F2) comprise at least one second ordered string of dated signatures.

7. Triggering method according to Claim 6, in which the search step comprises a step of selecting a sequence of consecutive signatures of a said second string as a function of a criterion of similarity between said sequence and signatures of the first string and in which said second timestamp is the date associated with the first signature of the selected sequence.

8. Triggering method according to Claim 7, in which the selection of the sequence comprises a first step of selecting at least one pair of signatures comprising a signature of a said second string and a signature of said first string as a function of a criterion of similarity between a signature of the second string and a signature of the first string, a step of comparing a sequence of consecutive signatures of said second string, said sequence comprising one of said at least one selected signatures, with signatures of the first string and said sequence is selected as a function of the result of the comparison.

9. Triggering method according to Claim 1, **characterized in that** it furthermore comprises a step (E6) of transmitting a request (RQ1) containing said first data to the remote server (S) and **in that** the second timestamp is a timestamp (HS1) of reception of said extract (E) in said second stream (F2) received by said remote server (S).

10. Triggering method according to Claim 9, in which the step of obtaining an instant of triggering comprises a step of receiving a temporal item of information determined as a function of said second timestamp (HS1).

11. Triggering method according to Claim 1, in which said action is a rendition of a complementary content (C1) from a position, in said complementary content (C1), determined as a function of the second timestamp (HR1).

12. Device (D) for triggering at least one action relating to a first stream (F, F1) representative of a multimedia content (V) and undergoing rendition by a rendition device (TV), **characterized in that** it comprises:

- a microphone (MP);
- a module (OBT) for obtaining first data (DE, DE1) representing an extract (E) from the multimedia content (V), configured to obtain said extract (E) by recording through the microphone (MP) at least one audio component of a signal rendered by said rendition device (TV) during the rendition of the first stream (F, F1), and a first timestamp (H1, HM1) of rendition of said extract (E) by said rendition device (TV);
- a module (INT, DCI) for obtaining at least one instant of triggering (T, HD) determined as a function of a date scheduled for said action and of a time interval between said first timestamp (H1, HM1) and a second timestamp (HS1, HR1), said second timestamp defining a date of said extract (E) in a second stream (F2) representative of said content (V) and at the disposal of a remote server (S), and being associated with second data representing said extract (E), said second data being obtained by the remote server (S) from said second stream (F2);
- a module (DCL) for triggering at least one action (AC, AC2) at a said instant of triggering obtained.

13. Terminal (M, M1, M2, M3) **characterized in that** it comprises a triggering device according to Claim 12.

14. Computer program product comprising instructions for implementing the steps of a method for triggering at least one action relating to a first stream (F, F1) undergoing rendition, according to Claim 1, when it is loaded and executed by a processor.

Figure 1

Figure 2

E102        ENS

E104        EP

E106        SQ

E108        SQ-EP > S?

N        Y

SQ

E110

HS1

E110

Figure 3

Figure 4a

Figure 4b

SY1

F3   F3   F3

S1

RQ4

HS4

C4, TP4

F3

TV1

M1

F2

TV2

RQ6

HS6

C4, TP4

F3

TV3

M3

RQ5

HS5

C5, TP5, C6, TP6

M2

Figure 5

26

Figure 6

Figure 7

Figure 8

EPR

IV

IV₁        IVi        F2

Ai   Bi

Z2     Z2

Y

Figure 9a

EPX       F1

IEi

Ci   Di

Z1   Z1

Y

Figure 9b

ST81

ST82 — DSTij (SEi, SVj)

DSTij < DM1?

DSQ (SQX, SQR)

ST84

DSQmin < DM2

ST86

N

Y

ST7

ST88 — HR1

Figure 10

Figure 11

Figure 12

Figure 13

F2

HR1

TB1　　TB2　　TB3

Figure 14

V

T0　　HR1

CB

T1　　HC1

Figure 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2400753 A
- US 20120117584 A

**Littérature non-brevet citée dans la description**

- **J. HAITSMA ; T. KALKER.** A highly robust audio finger-printing system. *ISMIR,* 2002